(19) Europäisches Patentamt
European Patent Office
Office européen des brevets

(11)  **EP 4 472 113 A1**

(12)  **EUROPEAN PATENT APPLICATION**

(43) Date of publication:
04.12.2024  Bulletin 2024/49

(21) Application number: 24177837.2

(22) Date of filing: 24.05.2024

(51) International Patent Classification (IPC):
*H04L 1/00* (2006.01)  *H04B 7/06* (2006.01)
*H04L 5/00* (2006.01)

(52) Cooperative Patent Classification (CPC):
H04L 1/0026; H04B 7/0626; H04L 5/0048

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority:  30.05.2023  GB 202308064

(71) Applicant: Nokia Technologies Oy
02610 Espoo (FI)

(72) Inventors:
• SUAREZ RIVERA, Luis Alberto
81245 Munich (DE)
• VISOTSKY, Eugene
Illinois, 60089 (US)
• TOSATO, Filippo
91140 Villebon sur Yvette (FR)
• BROZZU, Francesco
92340 Bourg-la-Reine (FR)

(74) Representative: Script Intellectual Property LLP
Suite J, Anchor House
School Close
Chandlers Ford
Eastleigh, Hampshire SO53 4DY (GB)

(54)  **METHOD, APPARATUS AND COMPUTER PROGRAM**

(57)  There is provided an apparatus comprising means for: receiving, from a network entity, one or more channel state information reference signals and an initial configuration for performing a channel state information feedback process; determining one or more predicted channel state information values based on the initial configuration and measurements on the received one or more channel state information reference signals; determining, based on the measurements of the received one or more channel state information reference signals and/or the determined one or more predicted channel state information values, one or more indications for reconfiguring one or more characteristics of the channel state information feedback process; and sending, to the network entity, the one or more determined indications for reconfiguring one or more characteristics of a channel state information feedback process.

EP 4 472 113 A1

| 800 | receiving, from a network entity, one or more channel state information reference signals and an initial configuration for performing a channel state information feedback process |
|---|---|
| 802 | determining one or more predicted channel state information values based on the initial configuration and measurements on the received one or more channel state information reference signals |
| 804 | determining, based on the measurements of the received one or more channel state information reference signals and/or the determined one or more predicted channel state information values, one or more indications for reconfiguring one or more characteristics of the channel state information feedback process |
| 806 | sending, to the network entity, the one or more determined indications for reconfiguring one or more characteristics of the channel state information feedback process |

Fig. 8

**Description**

FIELD

The present application relates to a method, apparatus, system and computer program and in particular but not exclusively to reconfiguring characteristics of a channel state information feedback process.

BACKGROUND

A communication system can be seen as a facility that enables communication sessions between two or more entities such as user terminals, base stations and/or other nodes by providing carriers between the various entities involved in the communications path. A communication system can be provided for example by means of a communication network and one or more compatible communication devices. The communication sessions may comprise, for example, communication of data for carrying communications such as voice, video, electronic mail (email), text message, multimedia and/or content data and so on. Non-limiting examples of services provided comprise two-way or multi-way calls, data communication or multimedia services and access to a data network system, such as the Internet.

In a wireless communication system at least a part of a communication session between at least two stations occurs over a wireless link. Examples of wireless systems comprise public land mobile networks (PLMN), satellite based communication systems and different wireless local networks, for example wireless local area networks (WLAN). Some wireless systems can be divided into cells, and are therefore often referred to as cellular systems.

A user can access the communication system by means of an appropriate communication device or terminal. A communication device of a user may be referred to as user equipment (UE) or user device. A communication device is provided with an appropriate signal receiving and transmitting apparatus for enabling communications, for example enabling access to a communication network or communications directly with other users. The communication device may access a carrier provided by a station, for example a base station of a cell, and transmit and/or receive communications on the carrier.

The communication system and associated devices typically operate in accordance with a given standard or specification which sets out what the various entities associated with the system are permitted to do and how that should be achieved. Communication protocols and/or parameters which shall be used for the connection are also typically defined. One example of a communications system is UTRAN (3G radio). Other examples of communication systems are the long-term evolution (LTE) of the Universal Mobile Telecommunications System (UMTS) radio-access technology and so-called 5G or New Radio (NR) networks. NR is being standardized by the 3rd Generation Partnership Project (3GPP).

SUMMARY

According to an aspect, there is provided an apparatus comprising means for: receiving, from a network entity, one or more channel state information reference signals and an initial configuration for performing a channel state information feedback process; determining one or more predicted channel state information values based on the initial configuration and measurements on the received one or more channel state information reference signals; determining, based on the measurements of the received one or more channel state information reference signals and/or the determined one or more predicted channel state information values, one or more indications for reconfiguring one or more characteristics of the channel state information feedback process; and sending, to the network entity, the one or more determined indications for reconfiguring one or more characteristics of the channel state information feedback process.

The one or more channel state information reference signals may comprise one or more of: periodic/semi persistent channel state information reference signals; aperiodic channel state information reference signals; or joint periodic channel state information reference signals and aperiodic channel state information reference signals.

The one or more characteristics of the channel state information feedback process may comprise one or more of: a number of channel state information time-predicted precoding matrices sets to be reported, $N4$; a time window for the channel state information time-predicted precoding matrices sets $W_{CSI}$; the time spacing between time-predicted precoding matrices $d$; a number of Doppler sets in space-time-frequency domain compressed channel state information, $Q$; the periodicity of the periodic channel state information reference signals $T_{CSI-RS}$; a number of aperiodic channel state information reference signals in a burst set, $K$; the time spacing between signals in the aperiodic channel state information reference signals burst $m$; and a channel state information feedback delay time, $\delta$.

The initial configuration may comprise an initial value of the one or more characteristics.

The determining may comprise utilizing a channel state information predictor to determine the one or more predicted channel state information values, and the channel state information predictor may be configured to: utilize one or more historical channel state information reference signal measurements to determine one or more filter coefficients; and determine the one or more predicted channel state information values based on the one or more channel state information reference signals and the one or more determined filter coefficients.

The one or more indications for reconfiguring the one or more characteristics of the channel state information feedback process may comprise information indicating one or more of: one or more channel state information reference signals in an aperiodic channel state information reference signal burst to be deactivated; one or more channel state information reference signals in an aperiodic channel state information reference signal burst to be kept active; a request for a decrease in the number of channel state information reference signals in an aperiodic channel state information reference signal burst; or a request for an increase in the number of channel state information reference signals in an aperiodic channel state information reference signal burst.

The one or more indications for reconfiguring the one or more characteristics of the channel state information feedback process may comprise one or more of: information identifying one or more time locations of the one or more channel state information reference signals of an aperiodic channel state information reference signal burst to be deactivated or kept active; information identifying a new spacing between the channel state information reference signals of the aperiodic channel state information reference signal burst distributed within a time window for the time-predicted precoding matrices time locations after the reconfiguring; or information identifying a new density of the one or more channel state information reference signals in the aperiodic channel state information reference signal burst after the reconfiguring.

The one or more indications for reconfiguring the one or more characteristics of the channel state information feedback process may comprise information identifying a time location, wherein: at a time location before the identified time location, the accuracy of a channel state information predictor is one of: better by at least a threshold amount over a zero-order hold or worse than a zero-order hold; and at a time location after the identified time location, the accuracy of the channel state information predictor is the other one of: better by at least a threshold amount over a zero-order hold or worse than a zero-order hold.

The means may be further for: receiving, from the network entity, one or more further channel state information reference signals, wherein the one or more further channel state information reference signals may be based on the one or more determined indications for reconfiguring the one or more characteristics of the channel state information feedback process.

The apparatus may comprise a user equipment.

According to an aspect, there is provided a network entity comprising means for: sending, to a user equipment, one or more channel state information reference signals and an initial configuration for performing a channel state information feedback process; and receiving, from the user equipment, one or more indications for reconfiguring one or more characteristics of a channel state information feedback process.

The one or more channel state information reference signals may comprise one or more of: periodic/semi persistent channel state information reference signals; aperiodic channel state information reference signals; or joint periodic channel state information reference signals and aperiodic channel state information reference signals.

The one or more characteristics of the channel state information feedback process may comprise one or more of: a number of channel state information time-predicted precoding matrices sets to be reported, $N4$; a time window for the channel state information time-predicted precoding matrices sets $W_{CSi}$; the time spacing between time-predicted precoding matrices $d$; a number of Doppler sets in space-time-frequency domain compressed channel state information, $Q$; the periodicity of the periodic channel state information reference signals $T_{CSI-RS}$; a number of aperiodic channel state information reference signal in a burst set, $K$; the time spacing between signals in the aperiodic channel state information reference signal burst $m$; and a channel state information feedback delay time, $\delta$.

The initial configuration may comprise an initial value of the one or more characteristics.

The one or more indications for reconfiguring the one or more characteristics of the channel state information feedback process may comprise information indicating one or more of: one or more channel state information reference signals in an aperiodic channel state information reference signal burst to be deactivated; one or more channel state information reference signals in an aperiodic channel state information reference signal burst to be kept active; a request for a reduction in the number of channel state information reference signals in an aperiodic channel state information reference signal burst; or a request for an increase in the number of channel state information reference signals in an aperiodic channel state information reference signal burst.

The information indicating the one or more channel state information reference signals to be deactivated and/or the information indicating the one or more channel state information reference signals to be kept active and/or the request for the decrease or increase in the number of channel state information reference signals may comprise one or more of: information identifying one or more time locations of the one or more channel state information reference signals of an aperiodic channel state information reference signal burst to be deactivated or kept active; information identifying a new spacing between the channel state information reference signals of the aperiodic channel state information reference signal burst distributed within a time window for the time-predicted precoding matrices time locations after the reconfiguring; or information identifying a new density of the one or more channel state information reference signals in the aperiodic channel state information reference signal burst after the reconfiguring.

The one or more indications for reconfiguring the one or more characteristics of the channel state information feedback process may comprise information identifying a time location, wherein: at a time location before the identified time location, the accuracy of a channel state information predictor is one of: better by at least a threshold amount over a zero-order hold or worse than a zero-order hold; and at a time location after the identified time location, the accuracy of the channel state information predictor is the other one of: better by at least a threshold amount over a zero-order hold or worse than a zero-order hold.

The means may be further for: determining, based on the one or more indications for reconfiguring the one or more characteristics of the channel state information feedback process, one or more reconfigured characteristics for one or more further channel state information reference signals; and sending, to the user equipment, the one or more further channel state information reference signals.

Determining the one or more reconfigured characteristics may be further based on historical information comprised in one or more previous channel state information reports received from the user equipment.

The channel state information report may further comprise further channel state information, and wherein the determining is further based on the further channel state information.

The further channel state information may comprise one or more Time Domain Channel Properties indicators.

According to an aspect, there is provided an apparatus comprising at least one processor and at least one memory storing instructions that, when executed by the at least one processor, cause the apparatus at least to: receive, from a network entity, one or more channel state information reference signals and an initial configuration for performing a channel state information feedback process; determine one or more predicted channel state information values based on the initial configuration and measurements on the received one or more channel state information reference signals; determine, based on the measurements of the received one or more channel state information reference signals and/or the determined one or more predicted channel state information values, one or more indications for reconfiguring one or more characteristics of the channel state information feedback process; and send, to the network entity, the one or more determined indications for reconfiguring one or more characteristics of the channel state information feedback process.

The one or more channel state information reference signals may comprise one or more of: periodic/semi persistent channel state information reference signals; aperiodic channel state information reference signals; or joint periodic channel state information reference signals and aperiodic channel state information reference signals.

The one or more characteristics of the channel state information feedback process may comprise one or more of: a number of channel state information time-predicted precoding matrices sets to be reported, $N4$; a time window for the channel state information time-predicted precoding matrices sets $W_{CSi}$; the time spacing between time-predicted precoding matrices $d$; a number of Doppler sets in space-time-frequency domain compressed channel state information, $Q$; the periodicity of the periodic channel state information reference signals $T_{CSI-RS}$; a number of aperiodic channel state information reference signals in a burst set, $K$; the time spacing between signals in the aperiodic channel state information reference signals burst $m$; and a channel state information feedback delay time, $\delta$.

The initial configuration may comprise an initial value of the one or more characteristics.

The at least one processor may be further configured to cause the apparatus to utilize a channel state information predictor to determine the one or more predicted channel state information values, and the channel state information predictor may be configured to: utilize one or more historical channel state information reference signal measurements to determine one or more filter coefficients; and determine the one or more predicted channel state information values based on the one or more channel state information reference signals and the one or more determined filter coefficients.

The one or more indications for reconfiguring the one or more characteristics of the channel state information feedback process may comprise information indicating one or more of: one or more channel state information reference signals in an aperiodic channel state information reference signal burst to be deactivated; one or more channel state information reference signals in an aperiodic channel state information reference signal burst to be kept active; a request for a decrease in the number of channel state information reference signals in an aperiodic channel state information reference signal burst; or a request for an increase in the number of channel state information reference signals in an aperiodic channel state information reference signal burst.

The one or more indications for reconfiguring the one or more characteristics of the channel state information feedback process may comprise one or more of: information identifying one or more time locations of the one or more channel state information reference signals of an aperiodic channel state information reference signal burst to be deactivated or kept active; information identifying a new spacing between the channel state information reference signals of the aperiodic channel state information reference signal burst distributed within a time window for the time-predicted precoding matrices time locations after the reconfiguring; or information identifying a new density of the one or more channel state information reference signals in the aperiodic channel state information reference signal burst after the reconfiguring.

The one or more indications for reconfiguring the one or more characteristics of the channel state information feedback process may comprise information identifying a time location, wherein: at a time location before the identified time location, the accuracy of a channel state information predictor is one of: better by at least a threshold amount over a zero-order hold or worse than a zero-order hold; and at a time location after the identified time location, the accuracy of the channel state information predictor is the other one of: better by at least a threshold amount over a zero-order hold or worse than a zero-order hold.

The at least one processor may be further configured to cause the apparatus to: receive, from the network entity, one or more further channel state information reference signals, wherein the one or more further channel state information reference signals are based on the one or more determined indications for reconfiguring the one or more characteristics of the channel state information feedback process.

The apparatus may comprise a user equipment.

According to an aspect, there is provided an apparatus comprising at least one processor and at least one memory storing instructions that, when executed by the at least one processor, cause the apparatus at least to: send, to a user equipment, one or more channel state information reference signals and an initial configuration for performing a channel state information feedback process; and receive, from the user equipment, one or more indications for reconfiguring one or more characteristics of a channel state information feedback process.

The one or more channel state information reference signals may comprise one or more of: periodic/semi persistent channel state information reference signals; aperiodic channel state information reference signals; or joint periodic channel state information reference signals and aperiodic channel state information reference signals.

The one or more characteristics of the channel state information feedback process may comprise one or more of: a number of channel state information time-predicted precoding matrices sets to be reported, $N4$; a time window for the channel state information time-predicted precoding matrices sets $W_{CSI}$; the time spacing between time-predicted precoding matrices $d$; a number of Doppler sets in space-time-frequency domain compressed channel state information, $Q$; the periodicity of the periodic channel state information reference signals $T_{CSI-RS}$; a number of aperiodic channel state information reference signal in a burst set, $K$; the time spacing between signals in the aperiodic channel state information reference signal burst $m$; and a channel state information feedback delay time, $\delta$.

The initial configuration may comprise an initial value of the one or more characteristics.

The one or more indications for reconfiguring the one or more characteristics of the channel state information feedback process may comprise information indicating one or more of: one or more channel state information reference signals in an aperiodic channel state information reference signal burst to be deactivated; one or more channel state information reference signals in an aperiodic channel state information reference signal burst to be kept active; a request for a reduction in the number of channel state information reference signals in an aperiodic channel state information reference signal burst; or a request for an increase in the number of channel state information reference signals in an aperiodic channel state information reference signal burst.

The information indicating the one or more channel state information reference signals to be deactivated and/or the information indicating the one or more channel state information reference signals to be kept active and/or the request for the decrease or increase in the number of channel state information reference signals may comprise one or more of: information identifying one or more time locations of the one or more channel state information reference signals of an aperiodic channel state information reference signal burst to be deactivated or kept active; information identifying a new spacing between the channel state information reference signals of the aperiodic channel state information reference signal burst distributed within a time window for the time-predicted precoding matrices time locations after the reconfiguring; or information identifying a new density of the one or more channel state information reference signals in the aperiodic channel state information reference signal burst after the reconfiguring.

The one or more indications for reconfiguring the one or more characteristics of the channel state information feedback process may comprise information identifying a time location, wherein: at a time location before the identified time location, the accuracy of a channel state information predictor is one of: better by at least a threshold amount over a zero-order hold or worse than a zero-order hold; and at a time location after the identified time location, the accuracy of the channel state information predictor is the other one of: better by at least a threshold amount over a zero-order hold or worse than a zero-order hold.

The at least one processor may be further configured to cause the apparatus to: determine, based on the one or more indications for reconfiguring the one or more characteristics of the channel state information feedback process, one or more reconfigured characteristics for one or more further channel state information reference signals; and send, to the user equipment, the one or more further channel state information reference signals.

The at least one processor may be further configured to cause the apparatus to determine the one or more reconfigured characteristics further based on historical information comprised in one or more previous channel state information reports received from the user equipment.

The channel state information report may further comprise further channel state information, and wherein the determining is further based on the further channel state information.

The further channel state information may comprise one or more Time Domain Channel Properties indicators.

According to an aspect, there is provided a method comprising: receiving, from a network entity, one or more channel state information reference signals and an initial configuration for performing a channel state information feedback process; determining one or more predicted channel state information values based on the initial configuration and measurements on the received one or more channel state information reference signals; determining, based on the measurements of the received one or more channel state information reference signals and/or the determined one or more predicted channel state information values, one or more indications for reconfiguring one or more characteristics of the channel state information feedback process; and sending, to the network entity, the one or more determined indications for reconfiguring one or more characteristics of a channel state information feedback process.

The one or more channel state information reference signals may comprise one or more of: periodic/semi persistent channel state information reference signals; aperiodic channel state information reference signals; or joint periodic channel state information reference signals and aperiodic channel state information reference signals.

The one or more characteristics of the channel state information feedback process may comprise one or more of: a number of channel state information time-predicted precoding matrices sets to be reported, $N4$; a time window for the channel state information time-predicted precoding matrices sets $W_{CSI}$; the time spacing between time-predicted precoding matrices $d$; a number of Doppler sets in space-time-frequency domain compressed channel state information, $Q$; the periodicity of the periodic channel state information reference signals $T_{CSI-RS}$; a number of aperiodic channel state information reference signals in a burst set, $K$; the time spacing between signals in the aperiodic channel state information reference signals burst $m$; and a channel state information feedback delay time, $\delta$.

The initial configuration may comprise an initial value of the one or more characteristics.

The determining may comprise utilizing a channel state information predictor to determine the one or more predicted channel state information values, and the channel state information predictor may be configured to: utilize one or more historical channel state information reference signal measurements to determine one or more filter coefficients; and determine the one or more predicted channel state information values based on the one or more channel state information reference signals and the one or more determined filter coefficients.

The one or more indications for reconfiguring the one or more characteristics of the channel state information feedback process may comprise information indicating one or more of: one or more channel state information reference signals in an aperiodic channel state information reference signal burst to be deactivated; one or more channel state information reference signals in an aperiodic channel state information reference signal burst to be kept active; a request for a decrease in the number of channel state information reference signals in an aperiodic channel state information reference signal burst; or a request for an increase in the number of channel state information reference signals in an aperiodic channel state information reference signal burst.

The one or more indications for reconfiguring the one or more characteristics of the channel state information feedback process may comprise one or more of: information identifying one or more time locations of the one or more channel state information reference signals of an aperiodic channel state information reference signal burst to be deactivated or kept active; information identifying a new spacing between the channel state information reference signals of the aperiodic channel state information reference signal burst distributed within a time window for the time-predicted precoding matrices time locations after the reconfiguring; or information identifying a new density of the one or more channel state information reference signals in the aperiodic channel state information reference signal burst after the reconfiguring.

The one or more indications for reconfiguring the one or more characteristics of the channel state information feedback process may comprise information identifying a time location, wherein: at a time location before the identified time location, the accuracy of a channel state information predictor is one of: better by at least a threshold amount over a zero-order hold or worse than a zero-order hold; and at a time location after the identified time location, the accuracy of the channel state information predictor is the other one of: better by at least a threshold amount over a zero-order hold or worse than a zero-order hold.

The method may comprise: receiving, from the network entity, one or more further channel state information reference signals, wherein the one or more further channel state information reference signals are based on the one or more determined indications for reconfiguring the one or more characteristics of the channel state information feedback process.

According to an aspect, there is provided a method comprising: sending, to a user equipment, one or more channel state information reference signals and an initial configuration for performing a channel state information feedback process; and receiving, from the user equipment, one or more indications for reconfiguring one or more characteristics of a channel state information feedback process.

The one or more channel state information reference signals may comprise one or more of: periodic/semi persistent channel state information reference signals; aperiodic channel state information reference signals; aperiodic channel state information reference signals; or joint periodic channel state information reference signals and aperiodic channel state information reference signals.

The one or more characteristics of the channel state information feedback process may comprise one or more of: a number of channel state information time-predicted precoding matrices sets to be reported, $N4$; a time window for the channel state information time-predicted precoding matrices sets $W_{CSi}$; the time spacing between time-predicted precoding matrices $d$; a number of Doppler sets in space-time-frequency domain compressed channel state information, $Q$; the periodicity of the periodic channel state information reference signals $T_{CSI-RS}$; a number of aperiodic channel state information reference signal in a burst set, $K$; the time spacing between signals in the aperiodic channel state information reference signal burst $m$; and a channel state information feedback delay time, $\delta$.

The initial configuration may comprise an initial value of the one or more characteristics.

The one or more indications for reconfiguring the one or more characteristics of the channel state information feedback process may comprise information indicating one or more of: one or more channel state information reference signals in an aperiodic channel state information reference signal burst to be deactivated; one or more channel state information reference signals in an aperiodic channel state information reference signal burst to be kept active; a request for a reduction in the number of channel state information reference signals in an aperiodic channel state information reference signal burst; or a request for an increase in the number of channel state information reference signals in an aperiodic channel state information reference signal burst.

The information indicating the one or more channel state information reference signals to be deactivated and/or the information indicating the one or more channel state information reference signals to be kept active and/or the request for the decrease or increase in the number of channel state information reference signals may comprise one or more of: information identifying one or more time locations of the one or more channel state information reference signals of an aperiodic channel state information reference signal burst to be deactivated or kept active; information identifying a new spacing between the channel state information reference signals of the aperiodic channel state information reference signal burst distributed within a time window for the time-predicted precoding matrices time locations after the reconfiguring; or information identifying a new density of the one or more channel state information reference signals in the aperiodic channel state information reference signal burst after the reconfiguring.

The one or more indications for reconfiguring the one or more characteristics of the channel state information feedback process may comprise information identifying a time location, wherein: at a time location before the identified time location, the accuracy of a channel state information predictor is one of: better by at least a threshold amount over a zero-order hold or worse than a zero-order hold; and at a time location after the identified time location, the accuracy of the channel state information predictor is the other one of: better by at least a threshold amount over a zero-order hold or worse than a zero-order hold.

The method may comprise: determining, based on the one or more indications for reconfiguring the one or more characteristics of the channel state information feedback process, one or more reconfigured characteristics for one or more further channel state information reference signals; and sending, to the user equipment, the one or more further channel state information reference signals.

Determining the one or more reconfigured characteristics may be further based on historical information comprised in one or more previous channel state information reports received from the user equipment.

The channel state information report may further comprise further channel state information, and wherein the determining is further based on the further channel state information.

The further channel state information may comprise one or more Time Domain Channel Properties indicators.

According to an aspect, there is provided a computer readable medium comprising instructions which, when executed by an apparatus, cause the apparatus to perform at least the following: receiving, from a network entity, one or more channel state information reference signals and an initial configuration for performing a channel state information feedback process; determining one or more predicted channel state information values based on the initial configuration and measurements on the received one or more channel state information reference signals; determining, based on the measurements of the received one or more channel state information reference signals and/or the determined one or more predicted channel state information values, one or more indications for reconfiguring one or more characteristics of the channel state information feedback process; and sending, to the network entity, the one or more determined indications for reconfiguring one or more characteristics of a channel state information feedback process.

The one or more channel state information reference signals may comprise one or more of: periodic/semi persistent channel state information reference signals; aperiodic channel state information reference signals; or joint periodic channel state information reference signals and aperiodic channel state information reference signals.

The one or more characteristics of the channel state information feedback process may comprise one or more of: a number of channel state information time-predicted precoding matrices sets to be reported, $N4$; a time window for the channel state information time-predicted precoding matrices sets $W_{CSi}$; the time spacing between time-predicted precoding matrices $d$; a number of Doppler sets in space-time-frequency domain compressed channel state information, $Q$; the periodicity of the periodic channel state information reference signals $T_{CSI-RS}$; a number of aperiodic channel state information reference signals in a burst set, $K$; the time spacing between signals in the aperiodic channel state information reference signals burst $m$; and a channel state information feedback delay time, $\delta$.

The initial configuration may comprise an initial value of the one or more characteristics.

The determining may comprise utilizing a channel state information predictor to determine the one or more predicted channel state information values, and the channel state information predictor may be configured to: utilize one or more historical channel state information reference signal measurements to determine one or more filter coefficients; and determine the one or more predicted channel state information values based on the one or more channel state information reference signals and the one or more determined filter coefficients.

The one or more indications for reconfiguring the one or more characteristics of the channel state information feedback process may comprise information indicating one or more of: one or more channel state information reference signals in an aperiodic channel state information reference signal burst to be deactivated; one or more channel state information reference signals in an aperiodic channel state information reference signal burst to be kept active; a request for a decrease in the number of channel state information reference signals in an aperiodic channel state information reference signal burst; or a request for an increase in the number of channel state information reference signals in an aperiodic channel state information reference signal burst.

The one or more indications for reconfiguring the one or more characteristics of the channel state information feedback process may comprise one or more of: information identifying one or more time locations of the one or more channel state information reference signals of an aperiodic channel state information reference signal burst to be deactivated or kept active; information identifying a new spacing between the channel state information reference signals of the aperiodic channel state information reference signal burst distributed within a time window for the time-predicted precoding matrices time locations after the reconfiguring; or information identifying a new density of the one or more channel state information reference signals in the aperiodic channel state information reference signal burst after the reconfiguring.

The one or more indications for reconfiguring the one or more characteristics of the channel state information feedback process may comprise information identifying a time location, wherein: at a time location before the identified time location, the accuracy of a channel state information predictor is one of: better by at least a threshold amount over a zero-order hold or worse than a zero-order hold; and at a time location after the identified time location, the accuracy of the channel state information predictor is the other one of: better by at least a threshold amount over a zero-order hold or worse than a zero-order hold.

The instructions, when executed by the apparatus, may further cause the apparatus to perform: receiving, from the network entity, one or more further channel state information reference signals, wherein the one or more further channel state information reference signals are based on the one or more determined indications for reconfiguring the one or more characteristics of the channel state information feedback process.

The apparatus may comprise a user equipment.

According to an aspect, there is provided a computer readable medium comprising instructions which, when executed by an apparatus, cause the apparatus to perform at least the following: sending, to a user equipment, one or more channel state information reference signals and an initial configuration for performing a channel state information feedback process; and receiving, from the user equipment, one or more indications for reconfiguring one or more characteristics of a channel state information feedback process.

The one or more channel state information reference signals may comprise one or more of: periodic/semi persistent channel state information reference signals; aperiodic channel state information reference signals; or joint periodic channel state information reference signals and aperiodic channel state information reference signals.

The one or more characteristics of the channel state information feedback process may comprise one or more of: a number of channel state information time-predicted precoding matrices sets to be reported, $N4$; a time window for the channel state information time-predicted precoding matrices sets $W_{CSi}$; the time spacing between time-predicted precoding matrices $d$; a number of Doppler sets in space-time-frequency domain compressed channel state information, $Q$; the periodicity of the periodic channel state information reference signals $T_{CSI-RS}$; a number of aperiodic channel state information reference signal in a burst set, $K$; the time spacing between signals in the aperiodic channel state information reference signal burst $m$; and a channel state information feedback delay time, $\delta$.

The initial configuration may comprise an initial value of the one or more characteristics.

The one or more indications for reconfiguring the one or more characteristics of the channel state information feedback process may comprise information indicating one or more of: one or more channel state information reference signals in an aperiodic channel state information reference signal burst to be deactivated; one or more channel state information reference signals in an aperiodic channel state information reference signal burst to be kept active; a request for a reduction in the number of channel state information reference signals in an aperiodic channel state information reference signal burst; or a request for an increase in the number of channel state information reference signals in an aperiodic channel state information reference signal burst.

The information indicating the one or more channel state information reference signals to be deactivated and/or the information indicating the one or more channel state information reference signals to be kept active and/or the request for the decrease or increase in the number of channel state information reference signals may comprise one or more of: information identifying one or more time locations of the one or more channel state information reference signals of an aperiodic channel state information reference signal burst to be deactivated or kept active; information identifying a new spacing between the channel state information reference signals of the aperiodic channel state information reference signal burst distributed within a time window for the time-predicted precoding matrices time locations after the reconfiguring; or information identifying a new density of the one or more channel state information reference signals in the aperiodic channel state information reference signal burst after the reconfiguring.

The one or more indications for reconfiguring the one or more characteristics of the channel state information feedback process may comprise information identifying a time location, wherein: at a time location before the identified time location, the accuracy of a channel state information predictor is one of: better by at least a threshold amount over a zero-order hold or worse than a zero-order hold; and at a time location after the identified time location, the accuracy of the channel state information predictor is the other one of: better by at least a threshold amount over a zero-order hold or worse than a zero-order hold.

The instructions, when executed by the apparatus, may further cause the apparatus to perform+: determining, based on the one or more indications for reconfiguring the one or more characteristics of the channel state information feedback process, one or more reconfigured characteristics for one or more further channel state information reference signals; and sending, to the user equipment, the one or more further channel state information reference signals.

Determining the one or more reconfigured characteristics may be further based on historical information comprised in one or more previous channel state information reports received from the user equipment.

The channel state information report may further comprise further channel state information, and wherein the determining is further based on the further channel state information.

The further channel state information may comprise one or more Time Domain Channel Properties indicators.

According to an aspect, there is provided a non-transitory computer readable medium comprising program instructions that, when executed by an apparatus, cause the apparatus to perform at least the method according to any of the preceding aspects.

In the above, many different embodiments have been described. It should be appreciated that further embodiments may be provided by the combination of any two or more of the embodiments described above.

DESCRIPTION OF FIGURES

Embodiments will now be described, by way of example only, with reference to the accompanying Figures in which:

Figure 1 shows a representation of a network system according to some example embodiments;
Figure 2 shows a representation of a control apparatus according to some example embodiments;
Figure 3 shows a representation of an apparatus according to some example embodiments;
Figure 4 illustrates a space-frequency-time precoding matrix tensor set and a resulting channel state information compression after transformation to the beam-delay-Doppler domain;
Figure 5 depicts a process of channel state information feedback including channel prediction and channel state information compression;
Figure 6 illustrates an example utilization of periodic/semi-persistent channel state information reference signal as an input for channel prediction;
Figure 7 illustrates an example utilization of aperiodic channel state information reference signal burst with a periodic channel state information reference signal as an input for channel prediction;
Figure 8 shows methods according to some examples;
Figure 9 shows an exemplary implementation of a prediction filter calculation by means of a joint utilization of $K$ aperiodic channel state information reference signal burst and a periodic channel state information reference signal;
Figures 10 and 11 show examples of different aperiodic channel state information reference signal bursts;
Figures 12 and 13 show simulation results comparing the accuracy of different approaches for predicting channel state information values; and
Figure 14 shows an example comparison of the accuracy of zero-order hold and channel state information prediction approaches.

DETAILED DESCRIPTION

A non-exhaustive list of some abbreviations used throughout the present disclosure is provided below for reference:

AP - Aperiodic

CSI - Channel State Information
EVD - Eigenvalue Decomposition
gNB - gNodeB
MU-MIMO Multiuser Multiple Input/Multiple Output
P - Periodic
PMI - Precoding Matrix Indicator
PDP - Power delay profile
PRB - Physical resource block
RE - Resource Elements
RS - Reference Signal
SP - Semipersistent
SU-MIMO Single User Multiple Input/Multiple Output
SVD - Singular Value Decomposition
TDCP - Time Domain Channel Properties
TRS - Tracking reference signals
UE - User Equipment
ZoH- Zero-order-Hold

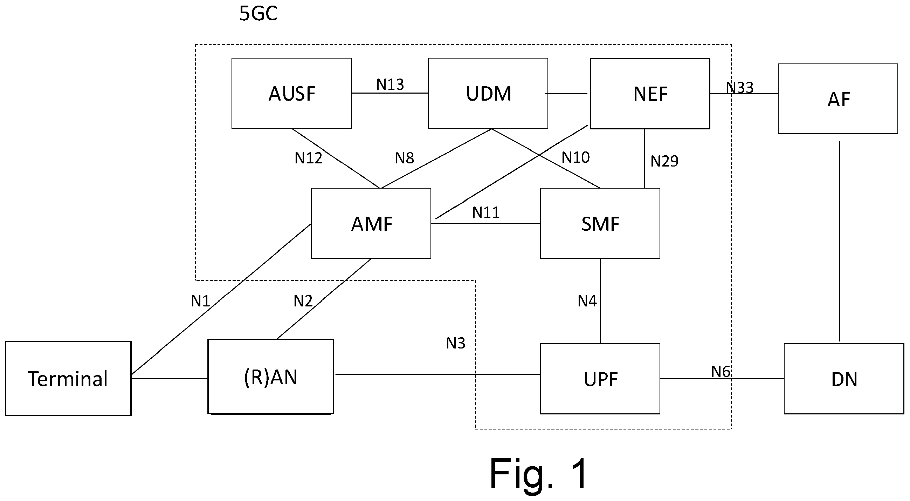

In the following certain embodiments are explained with reference to mobile communication devices capable of communication via a wireless cellular system and mobile communication systems serving such mobile communication devices. Before explaining in detail the exemplifying embodiments, certain general principles of a wireless communication system, access systems thereof, and mobile communication devices are briefly explained with reference to Figures 1, 2 and 3 to assist in understanding the technology underlying the described examples.

Figure 1 shows a schematic representation of a 5G system (5GS). The 5GS may be comprised by a terminal or user equipment (UE), a 5G radio access network (5GRAN) or next generation radio access network (NG-RAN), a 5G core network (5GC), one or more application function (AF) and one or more data networks (DN).

The 5G-RAN may comprise one or more gNodeB (GNB) or one or more gNodeB (GNB) distributed unit functions connected to one or more gNodeB (GNB) centralized unit functions.

The 5GC may comprise the following entities: Network Slice Selection Function (NSSF); Network Exposure Function; Network Repository Function (NRF); Policy Control Function (PCF); Unified Data Management (UDM); Application Function (AF); Authentication Server Function (AUSF); an Access and Mobility Management Function (AMF); and Session Management Function (SMF). Figure 1 also shows the various interfaces (N1, N2 etc.) that may be implemented between the various elements of the system.

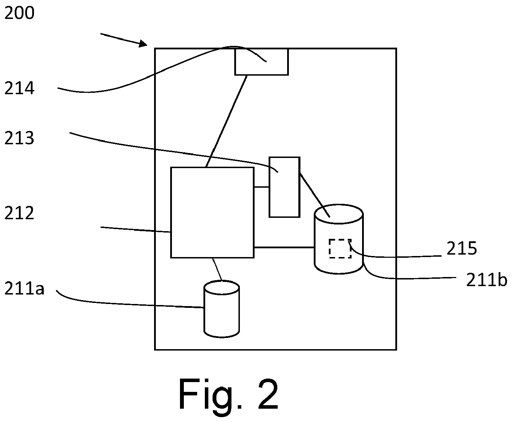

Figure 2 illustrates an example of a control apparatus 200 for controlling a function of the 5GRAN or the 5GC as illustrated on Figure 1. The control apparatus may comprise at least one random access memory (RAM) 211a, at least on read only memory (ROM) 211b, at least one processor 212, 213 and an input/output interface 214. The at least one processor 212, 213 may be coupled to the RAM 211a and the ROM 211b. The at least one processor 212, 213 may be configured to execute an appropriate software code 215. The software code 215 may for example allow to perform one or more steps to perform one or more of the present aspects. The software code 215 may be stored in the ROM 211b. The control apparatus 200 may be interconnected with another control apparatus 200 controlling another function of the 5GRAN or the 5GC. In some embodiments, each function of the 5GRAN or the 5GC comprises a control apparatus 200. In alternative embodiments, two or more functions of the 5GRAN or the 5GC may share a control apparatus.

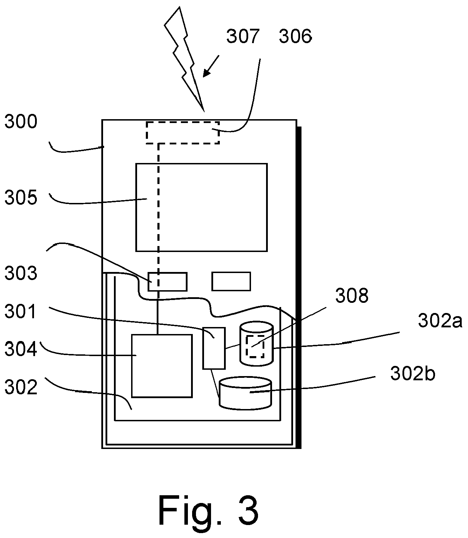

Figure 3 illustrates an example of a terminal 300, such as the terminal illustrated on Figure 1. The terminal 300 may be provided by any device capable of sending and receiving radio signals. Non-limiting examples comprise a user equipment, a mobile station (MS) or mobile device such as a mobile phone or what is known as a 'smart phone', a computer provided with a wireless interface card or other wireless interface facility (e.g., USB dongle), a personal data assistant (PDA) or a tablet provided with wireless communication capabilities, a machine-type communications (MTC) device, an Internet of things (IoT) type communication device or any combinations of these or the like. The terminal 300 may provide, for example, communication of data for carrying communications. The communications may be one or more of voice, electronic mail (email), text message, multimedia, data, machine data and so on.

The terminal 300 may receive signals over an air or radio interface 307 via appropriate apparatus for receiving and may transmit signals via appropriate apparatus for transmitting radio signals. In Figure 3 transceiver apparatus is designated schematically by block 306. The transceiver apparatus 306 may be provided for example by means of a radio part and associated antenna arrangement. The antenna arrangement may be arranged internally or externally to the mobile device.

The terminal 300 may be provided with at least one processor 301, at least one memory ROM 302a, at least one RAM 302b and other possible components 303 for use in software and hardware aided execution of tasks it is designed to perform, including control of access to and communications with access systems and other communication devices. The at least one processor 301 is coupled to the RAM 302b and the ROM 302a. The at least one processor 301 may be configured to execute an appropriate software code 308. The software code 308 may for example allow to perform one or more of the present aspects. The software code 308 may be stored in the ROM 302a.

The processor, storage and other relevant control apparatus can be provided on an appropriate circuit board and/or in chipsets. This feature is denoted by reference 304. The device may optionally have a user interface such as key pad 305, touch sensitive screen or pad, combinations thereof or the like. Optionally one or more of a display, a speaker and a microphone may be provided depending on the type of the device.

For 3GPP Rel 18 in the topic of CSI MU-MIMO Enhancements, a new type of codebook for high-speed CSI has been introduced. This codebook is intended to exploit the time-to-doppler domain transform in order to further exploit the existing correlation in time domain samples for CSI compression and prediction. In order to implement this codebook, a CSI predictor and an additional Doppler codebook may be required to perform time compression along with the space and frequency compression.

By way of introduction to some concepts relevant to the present disclosure, a brief explanation is provided of how CSI may be compressed for high speed Doppler codebook.

The channel information of interest may be represented by an explicit channel tensor defined in 3 dimensions:

the space component, which may be represented by $N$ Tx antenna ports in the access node (e.g. gNB);
the frequency component which may be defined by a bandwidth composed by a number of Physical resource blocks (PRB); and
the time component, which may be represented by a number of CSI time predicted estimations.

In current existing 3GPP standards, the channel may not be explicitly reported, but instead the associated precoding matrices required for the corresponding space-frequency beamforming may be reported. The CSI obtained from the precoding matrices may be initially obtained from singular value decomposition (SVD) or Eigenvalue decomposition (EVD) applied on the channel or associated channel correlation matrices.

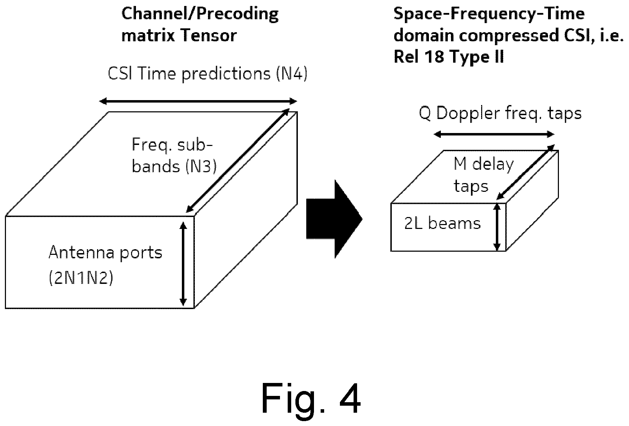

Figure 4 illustrates the space-frequency-time precoding matrix tensor set on the left hand side, and the resulting CSI compression after transformation to the beam-delay-Doppler domain on the right hand side.

For the space component, there may be a total of $2N1N2$ CSI ports, in which N1 and N2 represents the number of CSI ports columns and rows which define the horizontal and vertical domains of a 2D CSI antenna port structure, as well as the coefficient "2", because 2 antenna polarizations sets are considered (which may be typical for MIMO arrays with ±45° slant). For the frequency component, $N3$ represents a number of sub-bands in frequency composed by a number of averaged PRBs in each. Each sub-band may have an associated spatial precoding matrix with size $2N1N2$.

For the time component, $N4$ is a parameter for which represents the number of CSI time-predicted precoding matrices sets to be reported.

After compression, as shown in Figure 4, it can be seen that the resulting CSI report may be composed by a smaller structure of coefficients defined by $Q$ doppler sets each containing a set of coefficients defined by $2L$ beam projections and $M$ delay taps for each beam projection.

The CSI structure represented in the Beam-delay-Doppler domain may exploit the sparse characteristics of the channel/precoding matrix after the corresponding transformations with the respective codebooks for each domain. The codebooks used may allow to decompose the raw CSI information obtained from the eigenvector-based precoding matrices (calculated from the channel measurement and/or predictions) into a reduced set of Fourier projections and then determine the main components in beam, delay and Doppler domains.

To collect the necessary information to be compressed, in some examples a number of channel predictions may be made to cover a given time window $W_{CSI}$. By having accurate channel predictions in between of CSI measurements, it may be possible to compensate CSI aging which happens when the previous CSI report transmitted several milliseconds or tens of milliseconds away becomes outdated due to the ever-changing channel conditions.

It should be understood that, due to the relative motion between the UE and access node, the related moving speed and the multipath propagation characteristics, a Doppler spread may exist that is inversely proportional to the channel coherence time. The channel coherence time may define the stability of channel in a certain time window. With larger Doppler spread the channel coherence time may become narrower. CSI aging may occur gradually during time, and it may become more difficult to control if the channel coherence time is too narrow. On the other hand, besides the CSI aging it may also be beneficial to account for any inherent CSI feedback delay $\delta$ in time slots to recover and apply a CSI report into the access node. Accounting for the internal delay $n$ (in time slots) in the UE for generating the CSI report after the last CSI-RS has been received, the full CSI delay is $n + \delta$ time slots.

The combination of CSI processing delay and CSI aging can cause problems as the received CSI in the access node can be quite outdated, which may result in significant loss of performance. In this context, CSI prediction may be a useful tool to mitigate such degradation.

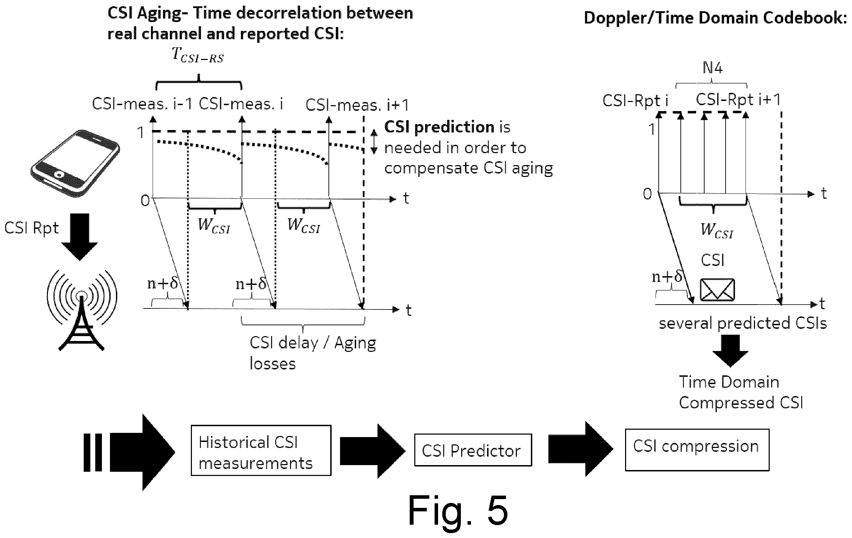

Figure 5 depicts a process of CSI feedback including channel prediction and CSI compression.

The left-hand side of Figure 5 shows CSI measurements being performed at time intervals $T_{CSI-RS} \cdot (i-1)$, $T_{CSI-RS} \cdot (i)$, and $T_{CSI-RS} \cdot (i+1)$, in which $T_{CSI-RS}$ is the time separation between periodic CSI-RS transmissions in this example. After each measurement, the UE sends a CSI report to the access node. The full delay in the access node receiving the CSI report is given by $n + \delta$. Thus, for example, the CSI report at $T_{CSI-RS} \cdot (i)$ is received by the access node at $T_{CSI-RS} \cdot (i) + n + \delta$. During this time, the CSI has aged, and so the accuracy of the CSI has also decreased. To account for the delay, several CSI predictions are made within a prediction time window $W_{CSI}$, which are shown on the right-hand side of Figure 5, where the predictions between the CSI report at time interval $T_{CSI-RS} \cdot$ (i) and time interval $T_{CSI-RS} \cdot$(i+1), which is received by the access node at $T_{CSI-RS} \cdot$ (i) + n + $\delta$ are shown.

As shown in Figure 5, to obtain the CSI predictions, historical channel measurements (which may also be interchangeably referred to as CSI measurements) may be obtained and stored. The historical channel measurements may then be used as input of a CSI predictor, e.g. Wiener Filter implementation, which may use the historical measurements to calculate prediction filter coefficients, and later on, to predict future channel states based on latest channel measurements by applying such filter coefficients.

After the channel states have been predicted, the corresponding precoding matrices can be obtained for the different predicted points. In total $N4$ space-frequency eigenvector-based precoding matrix sets may be obtained from channel prediction.

These precoding matrices sets may then be compressed in space and frequency by obtaining the respective beam-delay representation. In the example of Figure 5, $N4$ precoding matrix sets (which may also be interchangeably referred to as precoding matrix indicators (PMI)) are compressed.

In the example of Figure 5, the first PMI out of the $N4$ PMI may be obtained from a current measurement in the UE and the other PMIs ($N4$ - 1 PMIs) may correspond to CSI predictions (i.e. n + $\delta$ = 0). However as depicted in the Figure 5, the effect of the CSI feedback delay n + $\delta$ > 0 must be accounted for and the CSI calculation can shift the prediction horizon to compensate the delay also; thus all $N4$ PMIs can be obtained as a result of a CSI prediction.

Finally, the $N4$ PMIs can be compressed by obtaining a reduced set $Q < N4$ in the Doppler domain.

Some examples of the present disclosure may relate to the CSI reference signals (CSI-RS) allocation required to train the CSI predictor, as well as, the possibility of flexibly reconfiguring other CSI parameters to better respond to the channel dynamics.

Some approaches have been defined for the CSI-RS used in 3GPP Rel 18, more particularly using periodic/semi-persistent CSI-RS (P/SP-CSI-RS) but also Aperiodic CSI-RS (AP-CSI-RS) bursts. Such examples may have fixed characteristics based on given initial parameters. For instance, parameters like N4 and $W_{CSI}$ may also be based on an initial fixed setup.

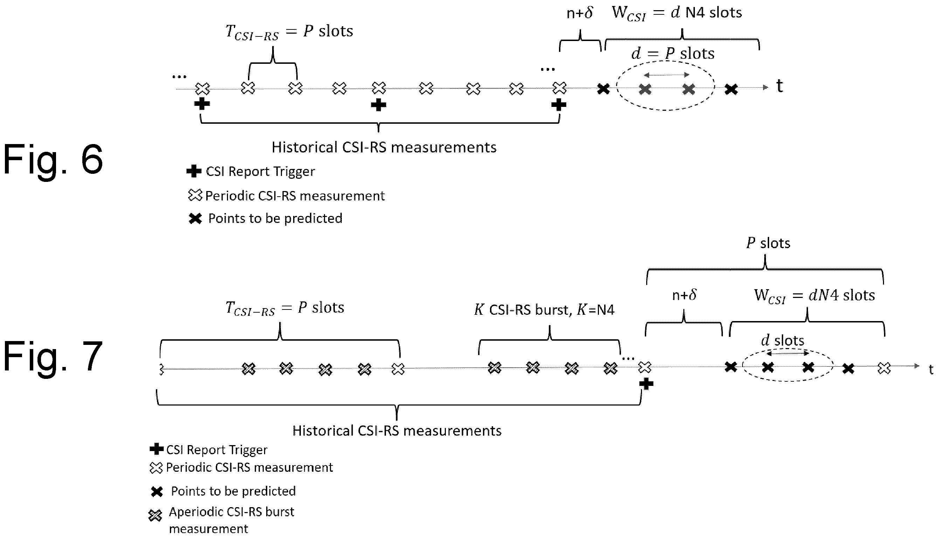

Figure 6 illustrates the utilization of P/SP-CSI-RS as input for channel prediction.

For the case of periodic (P) or semi-persistent (SP) CSI-RS, periodically in a continuous manner or during a triggered time window (for semi-persistent case) the CSI-RS may be sent with a periodicity given by $T_{CSI-RS}$ which is equal to $P = d$ slots, e.g., 5 slots or more. From this, it follows that the spacing between predicted PMIs is given by $T_{CSI-RS} = d$ slots. The length of the PMI predicted window is then given by $W_{CSI} = d$ $N4$ slots with

a time shift given by n + $\delta$, and $\delta$ = {0,1,2} slots.

An advantage of the periodic scheme is that the prediction filter can be continuously refreshed as CSI-RS are always available.

Another scheme with AP-CSI-RS, such as that illustrated in Figure 7, is possible. Figure 7 illustrates the utilization of AP-CSI-RS burst as an input for channel prediction. In the example of Figure 7, it is assumed without loss of generality that $K = N4$.

As shown in Figure 7, a set of $K$ AP-CSI-RS signals can be triggered for the CSI prediction. These signals can be triggered on a UE specific basis, initially for the filter calculation and later for applying the filter and carry out the prediction.

An advantage with this approach is that signals do not need to be sent in a continuous fashion. However, the spacing between AP-CSI-RS is equal to $m$ slots, with values $m$ = {1,2} slots with $d \le m$ which may imply a much denser CSI-RS packing during the period in which aperiodic transmission occurs.

Depending on the characteristics of the channel, the filter might need to be refreshed very frequently, causing a large radio resource overhead due to the density of the AP-CSI-RS burst. Regarding the current Rel. 18 numerology, the values may for example be $N4$ = {1,2, 4, 8} and $K$={4,8,12}, however other values may be also possible in further releases.

The number of AP-CSI-RS signals $K$ may be equal to the number of PMIs to be predicted, i.e. $N4$, as also illustrated in Figure 7. However, examples may not be restricted to only that correspondence - for instance, if $K$ = 4 with $m$ = 2 and $N4$ = 8 with $d$ = 1. In this case, some PMIs in between may be interpolated.

It should be understood that P-CSI RS and AP-CSI-RS bursts may be implemented in combination - for example Figure 7 also shows a P-CSI-RS in combination with AP-CSI-RS bursts. It should be understood that the example configurations shown in Figures 6 and 7 are for illustrative purposes and introduced without loss of generality. According to current 3GPP agreements just one type of CSI-RS (AP or P/SP) can be used at a time for measurements at the UE.

One major problem is that, there may not be enough accurate information at the access node to be able to carry out a parameter reconfiguration for the CSI prediction.

Some implementations to obtain reconfiguration indications may use time domain channel properties (TDCP) provided by the UE, which requires additional sets of tracking reference signals (TRS) to calculate one or more time correlation coefficients to obtain mobility statistics of the channel, and report those coefficients to the access node. However this information is obtained from specifically configured TRS and moreover it is quantized, which cannot fully capture with a sufficient accuracy some specific behaviour of the CSI-RS processes used for prediction.

In other implementations, information to obtain reconfiguration indications may be obtained from the predicted CSI, decompressed at the access node. However, this information is reduced and quantized after compression, introducing some non-negligible amount of error; moreover, the access node does not have direct knowledge of the channel measurements obtained in the UE, but may only count with predicted information contained in the CSI report. Therefore, the access node could not compare a predicted channel with the actual measurements. These two effects could potentially lead to unreliable and insufficient information for decision-making at the access node.

The UE may be in a better position to understand what is happening during the CSI feedback process, as the UE has access to both the channel measurements and the results of CSI prediction and compression, thus the UE is able to make computations on this data and provide more reliable signal indications on how to reconfigure the CSI parameters.

In some examples, a mechanism of signaling is provided where an indication may be embedded in the CSI feedback from the UE to provide useful information to the access node on how to reconfigure these parameters in a straightforward manner, without a large additional information bit overhead in the CSI report.

Some examples may provide a mechanism to reconfigure the value $K$ for the number of signals of AP-CSI-RS burst to reduce the radio overhead burden; and/or other parameters like $W_{CSI}$ and/or the value of $N4$ to improve the performance of the CSI feedback process.

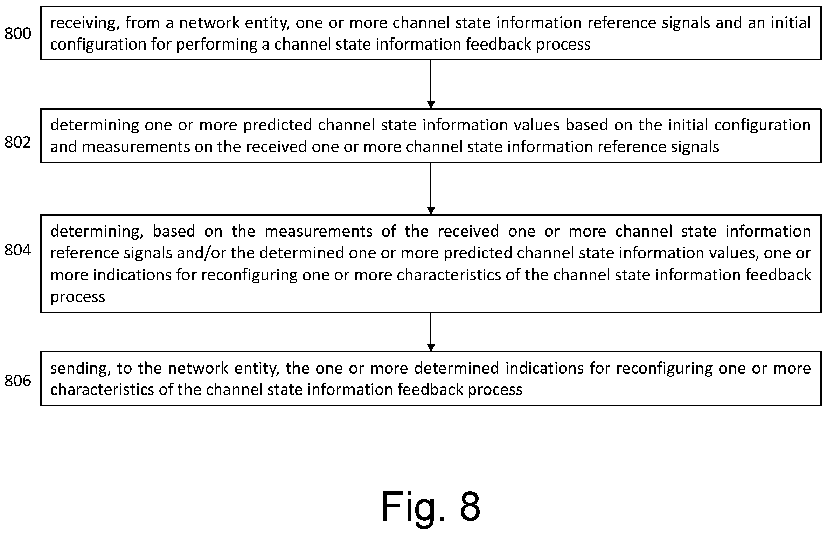

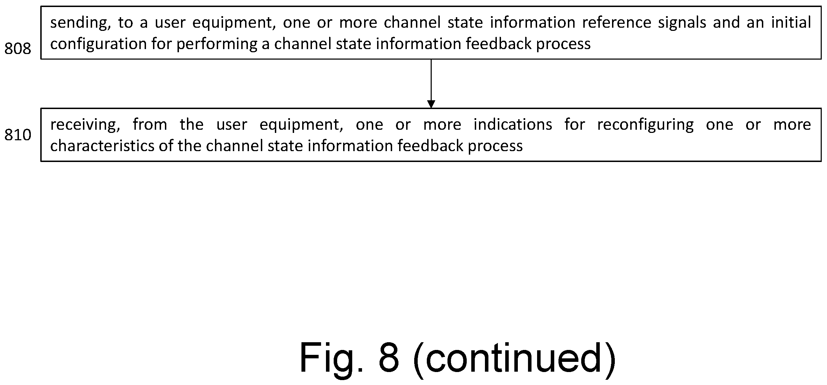

Reference is made to Figure 8, which shows methods according to some examples.

At 800, a method comprises receiving, from a network entity, one or more channel state information reference signals and an initial configuration for performing a channel state information feedback process.

At 802, the method comprises determining one or more predicted channel state information values based on the initial configuration and measurements on the received one or more channel state information reference signals.

At 804, the method comprises determining, based on the measurements of the received one or more channel state information reference signals and/or the determined one or more predicted channel state information values, one or more indications for reconfiguring one or more characteristics of the channel state information feedback process.

At 806, the method comprises sending, to the network entity, the one or more determined indications for reconfiguring one or more characteristics of the channel state information feedback process.

At 808, a method comprises sending, to a user equipment, one or more channel state information reference signals and an initial configuration for performing a channel state information feedback process.

At 810, the method comprises receiving, from the user equipment, one or more indications for reconfiguring one or more characteristics of a channel state information feedback process.

In some examples, steps 800-806 may be performed at or by a user equipment. In some examples, steps 808-810 may be performed at or by a network entity. In some examples, the network entity may comprise one or more base stations - for example a single base station (e.g. gNB) or a plurality of cooperating base stations. In some examples, the apparatus, such as the user equipment, may send the one or more indications as part of a CSI report or along with a CSI report - for example the indication(s) may be added to the CSI report as a separate field or appendix, or may be sent independently in a separate transmission. The CSI report may in some examples comprise the measurements and/or predicted channel state information values.

Some examples may relate to the reconfiguration of a CSI feedback process. The CSI feedback process may encompass the transmission of CSI-RS signals (such as P/SP and/or AP-CSI-RS signals), and/or CSI prediction and/or CSI compression. The CSI feedback process may be characterized by one or more characteristics. The one or more characteristics may comprise one or more of:

a number of channel state information time-predicted precoding matrices sets to be reported, $N4$;
a time window for the channel state information time-predicted precoding matrices sets $WCS_i$;
the time spacing between time-predicted precoding matrices $d$;
a number of Doppler sets in space-time-frequency domain compressed channel state information, $Q$;
the periodicity of the periodic channel state information reference signals $T_{CSI-RS}$;
a number of aperiodic channel state information reference signals in a burst set, $K$;
the time spacing between signals in the aperiodic channel state information reference signals burst $m$; and
a channel state information feedback delay time, $\delta$.

As explained previously, the use of AP-CSI-RS may result in highly dense CSI-RS resource allocation for the prediction filter calculation and the transmission occasions prior to a CSI prediction of the N4 PMIs ahead in time.

It may be beneficial to optimize the number of signals to a further reconfigured value $K'$ out of the original $K$ signals initially allocated. It may be beneficial to adapt the number/density of CSI-RS, but also the time positioning of the signals, for example based on historical CSI aging behaviour detected by the UE. In some examples the selection of the $K'$ signals may be performed based on time-domain correlation calculations at the UE for the set of CSI-RS measurements during filter calculation. After that, indications of the time location suggested for the reduced set of active AP-CSI-RS burst with $K'$

signals may be sent from the UE to the network entity.

Some other examples may relate to the reconfiguration of CSI-RS signals and the CSI feedback process, and may be valid for both P/SP-CSI-RS and/or AP-CSI-RS signals.

In some examples, the UE may send one or more indications to the network entity to assist the network entity in reconfiguring the length of $W_{CSI}$ and/or the value of $N4$ adapted to dynamics of channel. This may be beneficial, for example, as UE speed can be fluctuating in time thus requiring different parametrization.

In some examples, the UE may determine and indicate segments of an initially configured $W_{CSI}$ in which the channel aging degrades slowly or has reached a stable bottom point. In such cases, the CSI feedback process may perform better without any CSI prediction. As such, in some examples a Zero-order-Hold (ZoH) filter may be applied to hold a previous CSI measurement and apply the same PMI in the regions in which CSI prediction is not advantageous, and indicate the regions in which ZoH/CSI predictions are carried out.

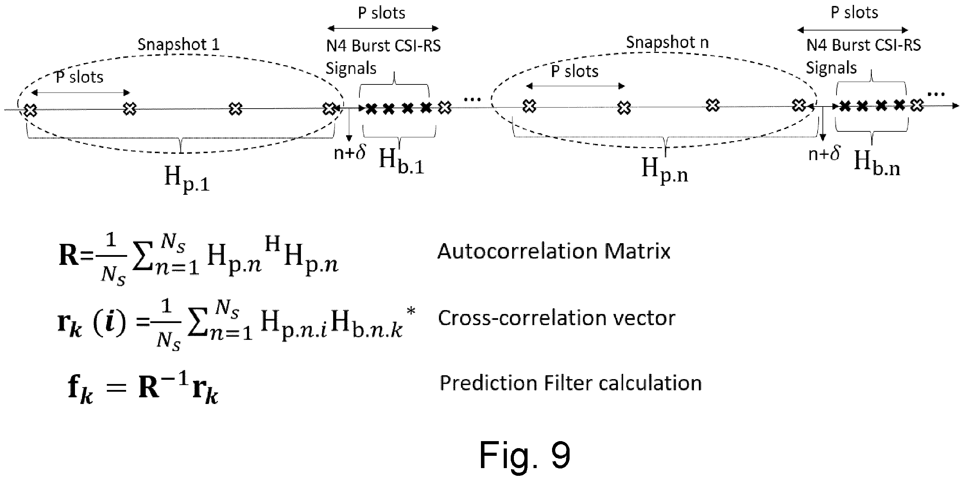

Reference is made to Figure 9, which shows an exemplary implementation of a prediction filter calculation by means of a joint utilization of $K$ AP-CSI-RS burst signals and a P-CSI-RS.

While some examples may relate to a joint mechanism of a P-CSI-RS reinforced with $K$ AP-CSI-RS, such as that depicted in Figure 9, in other examples an AP-CSI-RS burst may support the CSI prediction without the additional P-CSI-RS.

In some examples the joint set of AP-CSI-RS and P-CSI-RS measurements may be input into a Wiener filter calculation to calculate the filter coefficients. Some examples may obtain a set of filter coefficients **f** designed with size $N_f$ for each component of the space-frequency channel structure across the time samples.

In some examples, the autocorrelation channel matrix **R** of historical channel measurements may be calculated, with size $\mathbf{R} \in \mathbb{C}^{N_f \times N_f}$ for each component, in which **R** must be invertible.

As illustrated in Figure 9, in some examples there may be $N_s$ 'snapshots' of the CSI-RS channel, with $N_s \geq N_f$. In each of the snapshots there may be $N_f$ periodical CSI-RS measurements. Thus, for $N_s$ snapshots with $N_f$ periodical signals during filter training there may be $M_t = N_f \cdot N_s$ periodical transmission occasions.

In some examples, for each snapshot, there may be a count of 1 AP-CSI-RS burst for filter training. In some examples, without loss of generality, the burst may have $K = N4$ AP-CSI-RS, which may be used to calculate the $N4$ filter sets $\{\mathbf{f}_k\}$ for the associated predicted channels and respective PMIs to be reported.

In each of the snapshots, each of the historical CSI-RS measurements may be processed in frequency-domain or time delay-domain. In some examples the filters may be determined from the PRB information in frequency domain or for each selected time-delay component in time-delay domain if the power delay profile (PDP) was determined by transforming from frequency to time delay representation.

In the exemplary implementation depicted in Figure 9 the prediction filter may be calculated tap-by-tap in time delay domain. Each of the historical CSI-RS measurements, for a given tap, may contain a channel matrix whose size is determined by the number of transmitting antennas in the network entity, which may be given by $NTx$, and the number of receiver antennas in the UE given by $NRx$.

In some examples the spatial information of the channel matrices may be transformed from antenna to beam domain by projection into a known orthonormal basis. The prediction filter may be calculated for each associated coefficient of the channel matrix, e.g. for each Tx antenna (or spatial beam) and Rx antenna pairs associated coefficients.

For P-CSI-RS with $N_f$ measurements, a vector of channel coefficients with size $1 \times N_f$ may be created for each delay tap, each Tx component and Rx component. This vector is denoted by $H_{p.n}$ herein, where $n$ is the time index of one of the $N_s$ snapshots.

Likewise, for the $K$ AP-CSI-RS analogously a vector $1 \times K$ may be created for each delay tap, each Tx component and Rx component. This vector is denoted by $H_{b.n}$ herein, with time index $n$ of the set of $N_s$ snapshots.

For the calculation of the $K$ = N4 filter sets, the time autocorrelation matrix **R** may be obtained by calculating the conjugate inner product $H_{p.n}{}^H H_{p.n}$, where $(\cdot)^H$ represents the conjugate-transpose (also called Hermitian) of vector or a matrix, for each time sample with index $n$ and then averaging for the set of $N_s$ snapshots.

Similarly, to obtain the cross-correlation vector $\mathbf{r}_k(i)$ for each of the $K$ AP-CSI-RS, each $\mathbf{r}_k(i)$ may have size $N_f$ and may be obtained by calculating the conjugate product $H_{p.n.i} H_{b.n.k}{}^*$ between each P-CSI-RS $i$ out of the set of $N_f$ periodical measurements and the respective signal $k$ out of the $K$ AP-CSI-RS burst and then averaging for the set of $N_s$ snapshots. After determining **R** (auto-correlation matrix) and $\mathbf{r}_k$ (cross-correlation vectors), each of the $K$ = N4 filters may be obtained to compose the set $\{\mathbf{f}_k\}$ by solving a linear system of equations given as $\mathbf{f}_k = \mathbf{R}^{-1}\mathbf{r}_k$.

In some examples, one set of filters $\mathbf{f}_k$ associated to each of the $K$ signals in the AP-CSI burst may be determined, which may require some computational and radio resources. As mentioned previously, some implementations may be with or without a P-CSI-RS, but still may result in significant peaks of resource overhead due to the AP-CSI-RS burst if the filters are required to be constantly recalculated.

This may cause several issues for the overall functioning of the system. First of all, for some implementations, it may imply a larger computational complexity to calculate a large number of filter instances. It may therefore be beneficial to reduce this number. Likewise, the reduction of the number of signals may be beneficial to reduce the number of radio resources used for CSI-RS measurements.

To address these issues, some examples may provide a mechanism of reconfiguration to reduce the number of signals in the case of an AP-CSI-RS burst for CSI prediction.

In some examples the UE may measure the set of $K$ AP-CSI-RS burst and calculate the time correlation of each signal $k$ with respect to an earlier reference signal.

In some examples the first signal ($k = 1$) from the set of $K$ AP-CSI-RS burst may be the reference signal and that the subsequent signals in the burst ($1 < k \leq K$) may use the reference signal to calculate such time correlation.

For instance, the reference signal in the case of the example in the Figure 9 may be the previous transmission of the P-CSI-RS located in a transmission occasion $t$. In this example, the time correlation may correspond to the absolute value of the inner product $|C|=H_k^H H_t$ in which $H_k$ and $H_t$ could be, for instance, normalized vectorized versions of the two CSI-RS measurement channel matrix tensors, i.e the one from the signal $k$ of the AP-CSI-RS burst and the reference from the P-CSI-RS at the transmission occasion $t$, each tensor with size $NRx \times NTx \times N_{PRB}$. In other examples, these vectors may be obtained from the associated wideband or subband channel eigenvectors from each CSI-RS measurement.

The resulting time correlation may provide values between 0 and 1 of each of the $k$ signals in the burst with respect to the reference signal. Based on the time correlation values obtained for the $K$ signals, the UE may identify any redundant signal $k$ in which the time correlation does not change drastically (e.g. it does not goes below a correlation threshold) with respect to the previous burst signals transmitted before or during the current snapshot.

After having detected redundant signals repeatedly after one or more snapshots during filter training/calculation, those redundant signals may be selected for removal.

In some examples the UE may report, to the network entity, the indexes of the signals of the AP-CSI-RS burst which are suggested to be deactivated (i.e. the redundant signals selected for removal). Alternatively, the UE may report the indexes of signals to be kept active (i.e. the signals remaining after the redundant signals are removed). That is to say, the UE may send, to the network entity, information indicating one or more CSI-RS in a set, (i.e. AP-CSI-RS burst) that can be deactivated.

After receiving these indications, the network entity may determine which signal(s) to deactivate and reconfigure the AP-CSI-RS burst with reduced $K' < K$ signals accordingly.

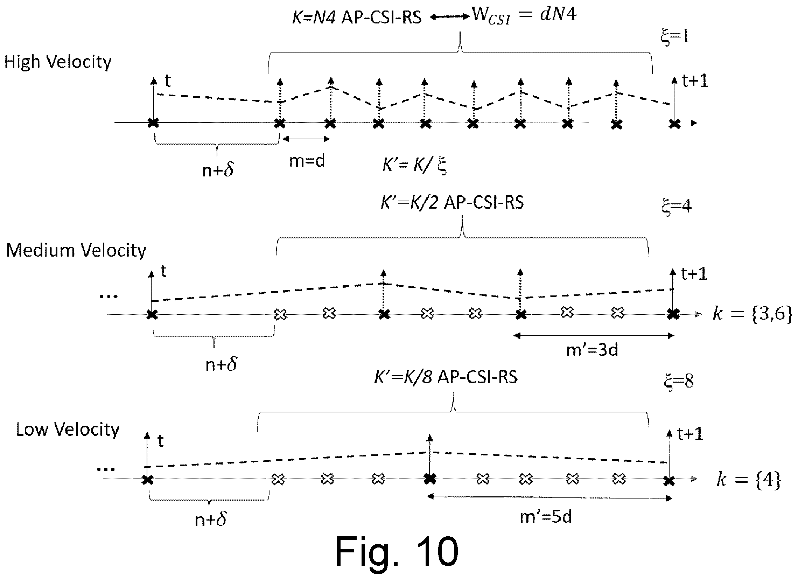

In some examples the $K'$ signals may be distributed nearly uniformly in the $W_{CSI}$ window. For example, as shown in Figure 10, the UE may report a value of a density of signals $1/\xi$ in which the relationship of $K$ and $K'$ is $K' = K/\xi$. In some examples $\xi$ could correspond, for simplicity, to an integer value, but it should be understood that in other examples $\xi$ may have a non-integer value.

As can be seen from Figure 10, in some examples the UE density of signals $1/\xi$ may depend on the UE velocity. For example, when the UE is moving with high velocity, more signals may be needed in the AP-CSI-RS burst to counteract CSI aging (as the UE will have moved further in a given time interval with increased Doppler spread, meaning that a CSI measurement will be more inaccurate), whereas when the UE is moving with a low velocity, fewer signals in the AP-CSI-RS burst may be needed (as the UE has not moved as far in a given time interval with reduced Doppler spread, meaning that the CSI measurement is less inaccurate).

As signals are removed from the original set of $K$ signals, it may mean that the other $K - K'$ signals, either during filter calculation and/or during CSI estimation and/or prediction, may be replaced with approximations by means of interpolation.

In some examples the AP-CSI-RS burst may be accompanied by a P-CSI-RS, such as that depicted previously in Figure 9, the UE may report a value to represent $\xi = \infty$. In this case the value may be used to indicate that the AP-CSI-RS burst is totally unnecessary and all signals in the burst can be deactivated for future triggering, i.e., $K' = 0$. In such cases the P-CSI-RS may be enough to carry out the CSI prediction and the $N4$ PMIs may be obtained by interpolation between the PMI of the CSI at the transmission occasion t and a predicted PMI for the CSI in a future P-CSI-RS transmission occasion $t + 1$.

In some examples the UE may report a new suggested time spacing between signals of the AP-CSI-RS burst $m'$ instead of reporting $\xi$. The new time spacing between signals may be defined with respect to a reference slot in which a reference signal is located and the subsequent signals are separated by a time distance (in slots) equal to $m'$. For instance, as shown in Figure 10, the transmission occasion $t + 1$ of the P-CSI-RS may be arbitrarily selected as the reference.

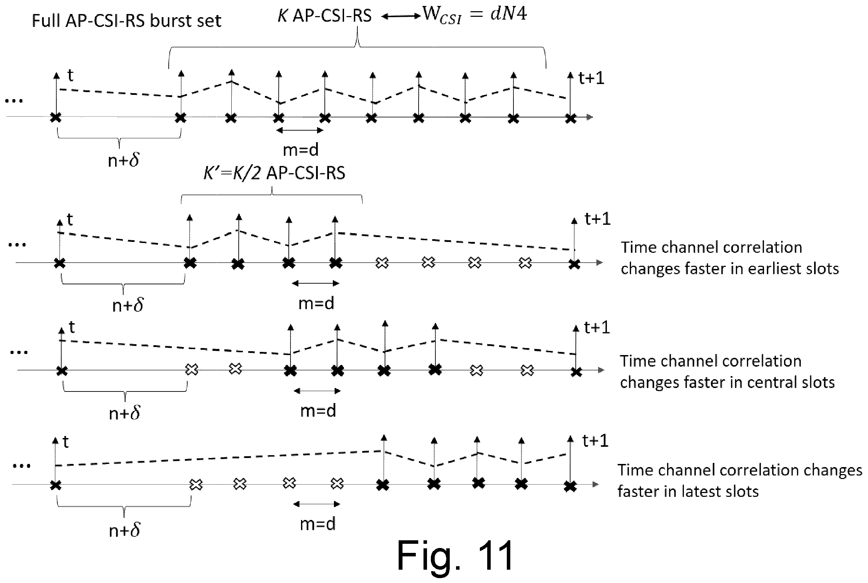

In some examples, such as that shown in Figure 11, the UE may report one or more sub-segments within the original $W_{CSI}$. The reported sub-segment may for example comprise a sub-segment in which the rate of time correlation variation changes rapidly. In some examples the $K'$ signals selected may be used to reinforce the CSI prediction in these sub-segments.

Other points outside the reported sub-segments may have very slow time correlation changes, for instance in early slots in which CSI aging is negligible or in the latest slots in which this value has touched a bottom value. For these situations, interpolation or a Zero-order-hold approach such as that described previously may be used to estimate the CSI values.

In some examples, the UE may send the network entity an indication for increasing the number of signals to a value $K' > K$. For example the UE may discover that the density of signals is insufficient and propose to increase $K' > K$ and/or alternatively to reduce spacing by having $m' < m$.

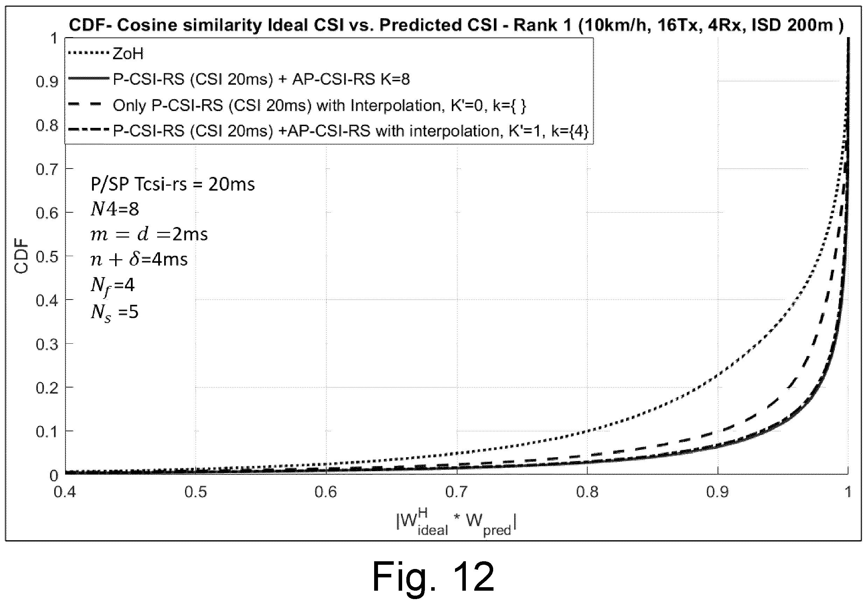

Reference is made to Figure 12, which shows results from simulations for 20 UEs which implement a CSI prediction. In the example of Figure 12, the network entity is configured with a central frequency at 2GHZ with 10MHz bandwidth (50PRBs, 13 sub-bands). The network entity counts with $NTx$=16 transmitting antenna ports and each UE has $NRx$=4 receiving antennas. After CSI prediction is calculated the first eigenvector precoder is computed, e.g. SU-MIMO rank-1, and cosine similarity metric (i.e. absolute value of the normalized Hermitian inner product of two channel/precoder vectors) is obtained with respect to the ideal CSI prediction first eigenvector.

In the example of Figure 12, a P-CSI-RS is combined with AP-CSI-RS burst as previously described in relation to Figure 9. For the basic simulations parameters, P-CSI-RS $T_{CSI\text{-}RS}$=20ms, UE speed is 10km/h, $d = m = 2$ms $N4 = 8$, $W_{CSI}= dN4$=16ms, and $n + \delta$ =4ms Initially, for the AP-CSI-RS $K = N4 = 8$.

The joint AP-CSI-RS and/or P-CSI-RS prediction filter was trained for all 20 UEs only once at the beginning of the simulation (i.e. single shot scheme). $N_s$ =5 snapshots were taken, each with $N_f = 4$ P-CSI-RS and 1 AP-CSI-RS with $K$ =8 signals. The full simulation length was 1000ms in which the first 400ms were used for training.

Figure 12 shows the results of the simulation, comparing the accuracy of: the ZoH approach; the joint approach using P-CSI-RS and all the $K$ signals for the AP-CSI-RS burst; another approach with P-CSI-RS only, i.e. $K' = 0$, $k = \{ \}$ and full use of interpolation to calculate the $N4$ CSI values; and lastly a method according to examples of the present disclosure, where the set of AP-CSI-RS is reconfigured to an optimal value $K' < K$. In Figure 12, the accuracy is represented on the horizontal axis, and the cumulative distribution function for the set of UEs is shown on the vertical axis. Here, accuracy is understood as being a measure of how similar the result of the predicted CSI is to an ideal CSI value, where a value of 1 on the horizontal axis represents full correspondence to the ideal CSI value.

As can be seen from the results shown in Figure 12, using P-CSI-RS $k = \{\}$ with interpolation provides a precoding vector that is closer to the ideal one, i.e. in other words, more accurate as cosine similarity is closer to 1, in comparison to ZoH. Higher the CSI accuracy may be an estimation of attainable MIMO performance. This may be advantageous from the point of view of minimization of CSI-RS radio resource overhead as the AP-CSI-RS may be avoided. However, by proper reduction and rearrangement, one single AP-CSI-RS may be set at $k = \{4\}$ as in the lower part of Figure 10. In this case a simple AP-CSI-RS burst with $K' = 1$ signal, i.e., $\xi = 8$ may

provide the same performance of the original $K$=8.

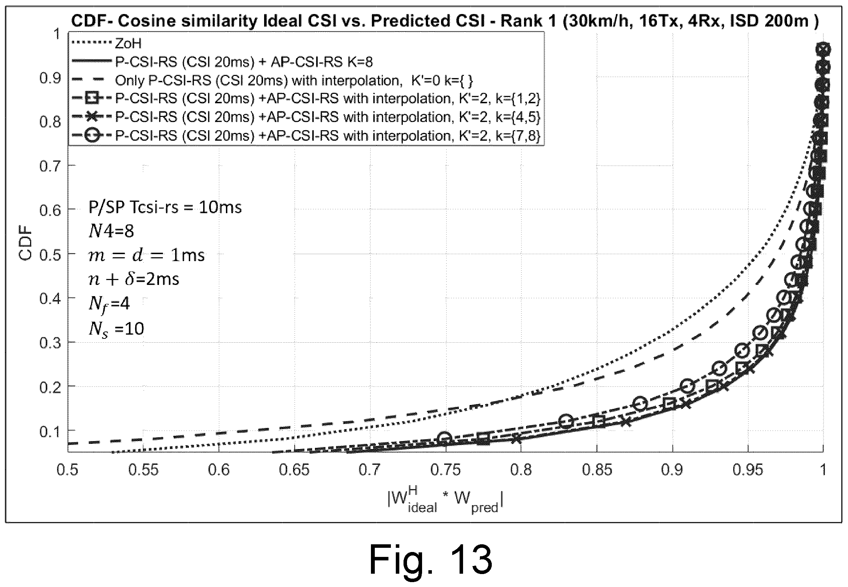

Figure 13 shows simulation results for a second example at higher UE velocity, for instance by increasing the UE speed at 30km/h.

In particular, the example of Figure 13 illustrates the concept of reporting sub-segments with $K'$ signals out of the total of $K$ signals (as shown in Figure 11) with different arbitrary configurations for illustration purposes. As compared to the simulations discussed above in relation to Figure 12, for the simulations for Figure 13 the parameters were changed as follows: P-CSI-RS $T_{CSI\text{-}RS}$=10ms, $d = m = 1$ms, $N4 = 8$, $W_{CSI}= dN4$=8ms, and $n + \delta$=2ms. Initially, for the AP-CSI-RS, $K = N4 = 8$.

In the simulations for Figure 13, the accuracy of ZoH is compared with: the full joint scheme of P-CSI-RS and AP-CSI-RS with $K = 8$ ; the scheme with P-CSI-RS only, i.e. $K' = 0$, $k = \{ \}$; and a scheme which reports sub-segments each with $K' = 2$ signals for the indexes $k = \{1,2\}$, $k = \{4,5\}$ and $k = \{7,8\}$ (which could alternatively be reported with the parameter $\xi = 4$ and $m'= 1$ms, $m'$ referred in this case as the separation between signals and the location $k$ of the first signal in the subsegment is the reference signal, i.e. $k =1$, 4 or 7).

In the results presented in Figure 13, it can be seen that the approach with only P-CSI-RS and interpolation at higher speed does not perform very well with respect to ZoH. It can also be seen that the approach which reports sub-segments with $K'$ signals out of a total of $K$ AP-CSI-RS burst, in all cases presents a performance quite close to the one attained by the full joint approach of AP-CSI-RS with $K$ signals and P-CSI-RS. At the same time, It can be seen that the variations of CSI accuracy may depend on the position of the sub-segment reported, which may be related with the CSI aging and time correlation dynamics of the channel.

In some examples, the UE may send an indication to the network entity indicating a region within $W_{CSI}$ in which Zero-order-hold (ZoH) filter outperforms the estimated performance or accuracy of the CSI prediction.

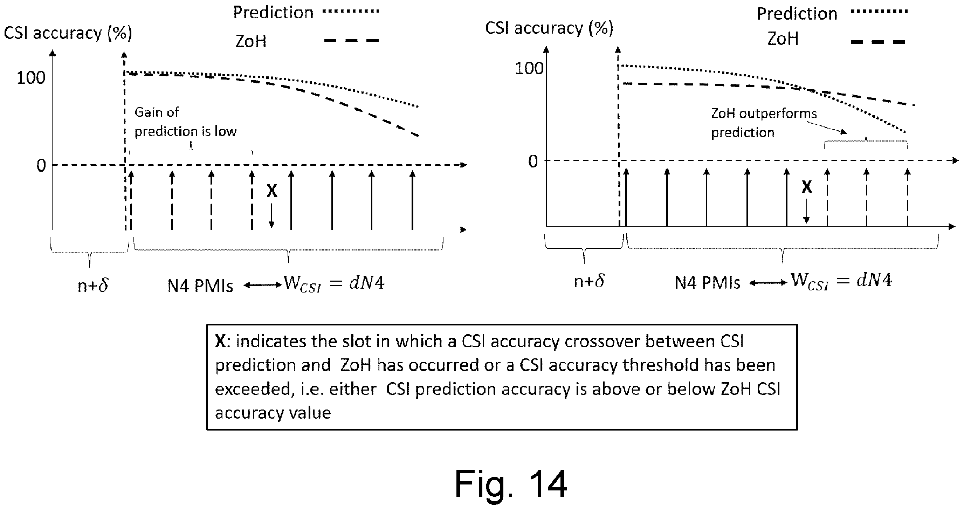

As previously mentioned, in the case of a ZoH filter a previous CSI measurement may apply to the same PMI in the regions in which CSI prediction is outperformed. This is illustrated in Figure 14, which shows on the left a case where the accuracy of CSI prediction is initially equivalent to the accuracy of ZoH, and where the accuracy of the CSI prediction is at least a threshold amount better than ZoH after slot X; and on the right a case where the accuracy of CSI prediction initially is better than ZoH, and where the accuracy of the CSI prediction is worse than ZoH after slot X. That is to say, before time location $X$ the accuracy of the CSI prediction is better (or worse) than ZoH by at least a threshold amount, and after time location $X$ the accuracy of the CSI prediction is worse (or better by at least a threshold amount) than ZoH. In some examples, the UE may indicate the time location $X$ to the network. In some examples the threshold value may be zero or greater than zero.

In some examples, the UE may indicate a slot number $X$ inside the original $W_{CSI}$ in which there is a cross-over point between ZoH and the CSI prediction. Then, the UE may assign one bit state {0,1} to indicate the region in which ZoH performs better, i.e. in the interval $[n + \delta, X]$ or the interval $[X, n + \delta + W_{CSI}]$. For instance, to determine the value of $X$ it would may be possible that the UE observes and compares previous CSI reports containing predicted CSIs with actual CSI calculations computed in the time points with the actual CSI measurements, which were previously predicted. For example, a cosine similarity calculation of predicted CSI or ZoH based CSI with respect to the actual CSI measured might give an estimation of performance and/or CSI accuracy.

By the UE indicating the region(s) within $W_{CSI}$ in which Zero-order-hold (ZoH) filter outperforms the attainable accuracy of the CSI prediction, the network may be aware that the number of PMIs $N4$ and $W_{CSI}$ may need to be reconfigured so the number of calculated PMIs and computational complexity is also reduced. This example is provided without loss of generality as other parameters such as $Q$ and $\delta$ may be also reconfigured.

In some examples the network may decide, based on the indicated region(s) within $W_{CSI}$ in which Zero-order-hold (ZoH) filter outperforms the estimated performance or accuracy of the CSI prediction, to reconfigure or not reconfigure the periodicity of P-CSI-RS.

In some cases it may be advantageous to not change the periodicity to avoid increasing the radio resources for CSI-RS allocation. However, in other cases, an underperforming CSI feedback may be preferable to be avoided.

In some examples, the indication of region(s) in which CSI prediction have low CSI accuracy below the ZoH may trigger an AP-CSI-RS burst to reinforce the prediction.

Thus, in some examples, a UE may receive one or more CSI-RS from a network node. The CSI-RS may be P/SP-CSI-RS, AP-CSI-RS, or joint P/SP-CSI-RS and AP-CSI-RS. The UE may also receive an initial configuration comprising characteristics (e.g. $N4$, $W_{CSI}$, $Q$, $K$, $\delta$, $m$, $d$) for performing a CSI feedback process from the network node. The UE may perform predictions based on the CSI-RS measurements, and based on the results of the CSI-RS measurements and/or CSI predictions, determine whether any of the characteristics need to be reconfigured. The UE may then indicate directly or indirectly (for example, an explicit indication of what characteristics to change, or an indirect indication that the network node may use to determine the characteristics to change) any characteristics that need to be reconfigured to the network node. Based on the indications, the network node may adapt one or more characteristics of the CSI-RS being sent to the UE as well as the related CSI feedback process. The network node may therefore be able to take steps to improve the CSI feedback process and/or reduce the radio overhead burden caused by CSI-RS transmission.

In some examples, an apparatus may comprise means for: receiving, from a network entity, one or more channel state information reference signals and an initial configuration for performing a channel state information feedback process; determining one or more predicted channel state information values based on the initial configuration and measurements on the received one or more channel state information reference signals; determining, based on the measurements of the received one or more channel state information reference signals and/or the determined one or more predicted channel state information values, one or more indications for reconfiguring one or more characteristics of the channel state information feedback process; and sending, to the network entity, the one or more determined indications for reconfiguring one or more characteristics of a channel state information feedback process.

In some examples, an apparatus may comprise at least one processor and at least one memory storing instructions that, when executed by the at least one processor, cause the apparatus at least to: receive, from a network entity, one or more channel state information reference signals and an initial configuration for performing a channel state information feedback process; determine one or more predicted channel state information values based on the initial configuration and measurements on the received one or more channel state information reference signals; determine, based on the measurements of the received one or more channel state information reference signals and/or the determined one or more predicted channel state information values, one or more indications for reconfiguring one or more characteristics of the channel state information feedback process; and send, to the network entity, the one or more determined indications for reconfiguring one or more characteristics of a channel state information feedback process.

In some examples, a network entity may comprise means for: sending, to a user equipment, one or more channel state information reference signals and an initial configuration for performing a channel state information feedback process; and receiving, from the user equipment, one or more indications for reconfiguring one or more characteristics of a channel state information feedback process.

In some examples, a network entity may comprise at least one processor and at least one memory storing instructions that, when executed by the at least one processor, cause the network entity at least to: send, to a user equipment, one or more channel state information reference signals and an initial configuration for performing a channel state information feedback process; and receive, from the user equipment, one or more indications for reconfiguring one or more characteristics of a channel state information feedback process.

It should be understood that the apparatuses may comprise or be coupled to other units or modules etc., such as radio parts or radio heads, used in or for transmission and/or reception. Although the apparatuses have been described as one entity, different modules and memory may be implemented in one or more physical or logical entities.

It is noted that whilst some embodiments have been described in relation to 5G networks, similar principles can be applied in relation to other networks and communication systems. Therefore, although certain embodiments were described above by way of example with reference to certain example architectures for wireless networks, technologies and standards, embodiments may be applied to any other suitable forms of communication systems than those illustrated and described herein.

It is also noted herein that while the above describes example embodiments, there are several variations and modifications which may be made to the disclosed solution without departing from the scope of the present invention.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

In general, the various embodiments may be implemented in hardware or special purpose circuitry, software, logic or any combination thereof. Some aspects of the disclosure may be implemented in hardware, while other aspects may be implemented in firmware or software which may be executed by a controller, microprocessor or other computing device, although the disclosure is not limited thereto. While various aspects of the disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As used in this application, the term "circuitry" may refer to one or more or all of the following:

(a) hardware-only circuit implementations (such as implementations in only analog and/or digital circuitry) and
(b) combinations of hardware circuits and software, such as (as applicable):

(i) a combination of analog and/or digital hardware circuit(s) with software/firmware and
(ii) any portions of hardware processor(s) with software (including digital signal processor(s)), software, and memory(ies) that work together to cause an apparatus, such as a mobile phone or server, to perform various functions) and

(c) hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The embodiments of this disclosure may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they comprise program instructions to perform particular tasks. A computer program product may comprise one or more computer-executable components which, when the program is run, are configured to carry out embodiments. The one or more computer-executable components may be at least one software code or portions of it.

Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD. The physical media is a non-transitory media.

The term "non-transitory," as used herein, is a limitation of the medium itself (i.e., tangible, not a signal ) as opposed to a limitation on data storage persistency (e.g., RAM vs. ROM).

The memory may be of any type suitable to the local technical environment and may be implemented using any suitable data storage technology, such as semiconductor based memory devices, magnetic memory devices and systems, optical memory devices and systems, fixed memory and removable memory. The data processors may be of any type suitable to the local technical environment, and may comprise one or more of general purpose computers, special purpose computers, microprocessors, digital signal processors (DSPs), application specific integrated circuits (ASIC), FPGA, gate level circuits and processors based on multi core processor architecture, as non-limiting examples.

Embodiments of the disclosure may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The scope of protection sought for various embodiments of the disclosure is set out by the independent claims. The embodiments and features, if any, described in this specification that do not fall under the scope of the independent claims are to be interpreted as examples useful for understanding various embodiments of the disclosure.

The foregoing description has provided by way of non-limiting examples a full and informative description of the exemplary embodiment of this disclosure. However, various modifications and adaptations may become apparent to those skilled in the relevant arts in view of the foregoing description, when read in conjunction with the accompanying drawings and the appended claims. However, all such and similar modifications of the teachings of this disclosure will still fall within the scope of this invention as defined in the appended claims. Indeed, there is a further embodiment comprising a combination of one or more embodiments with any of the other embodiments previously discussed.

## Claims

1. An apparatus comprising means for:

   receiving, from a network entity, one or more channel state information reference signals and an initial configuration for performing a channel state information feedback process;
   determining one or more predicted channel state information values based on the initial configuration and measurements on the received one or more channel state information reference signals;
   determining, based on the measurements of the received one or more channel state information reference signals and/or the determined one or more predicted channel state information values, one or more indications for reconfiguring one or more characteristics of the channel state information feedback process; and
   sending, to the network entity, the one or more determined indications for reconfiguring one or more characteristics of the channel state information feedback process.

2. The apparatus of claim 1, wherein the one or more channel state information reference signals comprises one or more of:

   periodic/semi persistent channel state information reference signals;
   aperiodic channel state information reference signals; or
   joint periodic channel state information reference signals and aperiodic channel state information reference signals.

3. The apparatus of claim 1 or 2, wherein the one or more characteristics of the channel state information feedback process comprises one or more of:

   a number of channel state information time-predicted precoding matrices sets to be reported, $N4$;
   a time window for the channel state information time-predicted precoding matrices sets $WCS_i$;
   the time spacing between time-predicted precoding matrices $d$;
   a number of Doppler sets in space-time-frequency domain compressed channel state information, $Q$;
   the periodicity of the periodic channel state information reference signals $T_{CSI-RS}$;
   a number of aperiodic channel state information reference signals in a burst set, $K$;
   the time spacing between signals in the aperiodic channel state information reference signals burst $m$; and
   a channel state information feedback delay time, $\delta$.

4. The apparatus of claim 3, wherein the initial configuration comprises an initial value of the one or more characteristics.

5. The apparatus of any preceding claim, wherein the determining comprises utilizing a channel state information predictor to determine the one or more predicted channel state information values, and wherein the channel state information predictor is configured to:

   utilize one or more historical channel state information reference signal measurements to determine one or more filter coefficients; and
   determine the one or more predicted channel state information values based on the one or more channel state information reference signals and the one or more determined filter coefficients.

6. The apparatus of any preceding claim, wherein the one or more indications for reconfiguring the one or more characteristics of the channel state information feedback process comprises information indicating one or more of:

one or more channel state information reference signals in an aperiodic channel state information reference signal burst to be deactivated;
one or more channel state information reference signals in an aperiodic channel state information reference signal burst to be kept active;
a request for a decrease in the number of channel state information reference signals in an aperiodic channel state information reference signal burst; or
a request for an increase in the number of channel state information reference signals in an aperiodic channel state information reference signal burst.

7. The apparatus of claim 6, wherein the one or more indications for reconfiguring the one or more characteristics of the channel state information feedback process comprises one or more of:

information identifying one or more time locations of the one or more channel state information reference signals of an aperiodic channel state information reference signal burst to be deactivated or kept active;
information identifying a new spacing between the channel state information reference signals of the aperiodic channel state information reference signal burst distributed within a time window for the time-predicted precoding matrices time locations after the reconfiguring; or
information identifying a new density of the one or more channel state information reference signals in the aperiodic channel state information reference signal burst after the reconfiguring.

8. The apparatus of any preceding claim, wherein the one or more indications for reconfiguring the one or more characteristics of the channel state information feedback process comprises information identifying a time location, wherein:

at a time location before the identified time location, the accuracy of a channel state information predictor is one of: better by at least a threshold amount over a zero-order hold or worse than a zero-order hold; and
at a time location after the identified time location, the accuracy of the channel state information predictor is the other one of: better by at least a threshold amount over a zero-order hold or worse than a zero-order hold.

9. The apparatus of any preceding claim, wherein the means is further for:
receiving, from the network entity, one or more further channel state information reference signals, wherein the one or more further channel state information reference signals are based on the one or more determined indications for reconfiguring the one or more characteristics of the channel state information feedback process.

10. The apparatus of any preceding claim, wherein the apparatus comprises a user equipment.

11. A network entity comprising means for:

sending, to a user equipment, one or more channel state information reference signals and an initial configuration for performing a channel state information feedback process; and
receiving, from the user equipment one or more indications for reconfiguring one or more characteristics of the channel state information feedback process.

12. The network entity of claim 11, wherein the one or more channel state information reference signals comprises one or more of:

periodic/semi persistent channel state information reference signals;
aperiodic channel state information reference signals; or
joint periodic channel state information reference signals and aperiodic channel state information reference signals.

13. The network entity of claim 11 or 12, wherein the one or more characteristics of the channel state information feedback process comprises one or more of:

a number of channel state information time-predicted precoding matrices sets to be reported, $N4$;
a time window for the channel state information time-predicted precoding matrices sets $W_{CSI}$;
the time spacing between time-predicted precoding matrices $d$;
a number of Doppler sets in space-time-frequency domain compressed channel state information, $Q$;
the periodicity of the periodic channel state information reference signals $T_{CSI\text{-}RS}$;
a number of aperiodic channel state information reference signals in a burst set, $K$;
the time spacing between signals in the aperiodic channel state information reference signal burst $m$; and
a channel state information feedback delay time, $\delta$.

14. A method comprising:

receiving, from a network entity, one or more channel state information reference signals and an initial configuration for performing a channel state information feedback process;
determining one or more predicted channel state information values based on the initial configuration and measurements on the received one or more channel state information reference signals;
determining, based on the measurements of the received one or more channel state information reference signals and/or the determined one or more predicted channel state information values, one or more indications for reconfiguring one or more characteristics of the channel state information feedback process; and
sending, to the network entity, the one or more determined indications for reconfiguring one or more characteristics of the channel state information feedback process.

15. A method comprising:

sending, to a user equipment, one or more channel state information reference signals and an initial configuration for performing a channel state information feedback process; and
receiving, from the user equipment, comprising one or more indications for reconfiguring one or more characteristics of the channel state information feedback process.

Fig. 1

EP 4 472 113 A1

Fig. 2

Fig. 3

**Channel/Precoding matrix Tensor**

CSI Time predictions (N4)

Freq. sub-bands (N3)

Antenna ports (2N1N2)

**Space-Frequency-Time domain compressed CSI, i.e. Rel 18 Type II**

Q Doppler freq. taps

M delay taps

2L beams

Fig. 4

**CSI Aging- Time decorrelation between real channel and reported CSI:**

$T_{CSI-RS}$

CSI-meas. i-1   CSI-meas. i   CSI-meas. i+1

**CSI prediction** is needed in order to compensate CSI aging

$W_{CSI}$   $W_{CSI}$

CSI Rpt

$n+\delta$   $n+\delta$

CSI delay / Aging losses

**Doppler/Time Domain Codebook:**

N4

CSI-Rpt i   CSI-Rpt i+1

$W_{CSI}$

CSI

$n+\delta$

several predicted CSIs

Time Domain Compressed CSI

Historical CSI measurements → CSI Predictor → CSI compression

# Fig. 5

## Fig. 6

$T_{CSI-RS} = P$ slots

$n+\delta$  $W_{CSI} = d$ N4 slots

$d = P$ slots

t

Historical CSI-RS measurements

✚ CSI Report Trigger

✖ Periodic CSI-RS measurement

✖ Points to be predicted

## Fig. 7

$T_{CSI-RS} = P$ slots

$K$ CSI-RS burst, $K$=N4

$P$ slots

$n+\delta$  $W_{CSI} = dN4$ slots

$d$ slots

t

Historical CSI-RS measurements

✚ CSI Report Trigger

✖ Periodic CSI-RS measurement

✖ Points to be predicted

✖ Aperiodic CSI-RS burst measurement

800 | receiving, from a network entity, one or more channel state information reference signals and an initial configuration for performing a channel state information feedback process

802 | determining one or more predicted channel state information values based on the initial configuration and measurements on the received one or more channel state information reference signals

804 | determining, based on the measurements of the received one or more channel state information reference signals and/or the determined one or more predicted channel state information values, one or more indications for reconfiguring one or more characteristics of the channel state information feedback process

806 | sending, to the network entity, the one or more determined indications for reconfiguring one or more characteristics of the channel state information feedback process

# Fig. 8

808 | sending, to a user equipment, one or more channel state information reference signals and an initial configuration for performing a channel state information feedback process

810 | receiving, from the user equipment, one or more indications for reconfiguring one or more characteristics of the channel state information feedback process

# Fig. 8 (continued)

EP 4 472 113 A1

$$R = \frac{1}{N_S} \sum_{n=1}^{N_S} H_{p.n}{}^H H_{p.n} \qquad \text{Autocorrelation Matrix}$$

$$r_k(i) = \frac{1}{N_S} \sum_{n=1}^{N_S} H_{p.n.i} H_{b.n.k}{}^* \qquad \text{Cross-correlation vector}$$

$$f_k = R^{-1} r_k \qquad \text{Prediction Filter calculation}$$

Fig. 9

Fig. 10

Fig. 11

**CDF- Cosine similarity Ideal CSI vs. Predicted CSI - Rank 1 (10km/h, 16Tx, 4Rx, ISD 200m )**

........ ZoH

——— P-CSI-RS (CSI 20ms) + AP-CSI-RS K=8

– – – Only P-CSI-RS (CSI 20ms) with Interpolation, K'=0, k={ }

–·–·– P-CSI-RS (CSI 20ms) +AP-CSI-RS with interpolation, K'=1, k={4}

P/SP Tcsi-rs = 20ms
$N4=8$
$m = d =2$ms
$n + \delta =4$ms
$N_f =4$
$N_s =5$

CDF

$|W^H_{ideal} * W_{pred}|$

Fig. 12

**CDF- Cosine similarity Ideal CSI vs. Predicted CSI - Rank 1 (30km/h, 16Tx, 4Rx, ISD 200m )**

Legend:
- ZoH
- P-CSI-RS (CSI 20ms) + AP-CSI-RS K=8
- Only P-CSI-RS (CSI 20ms) with interpolation, K'=0 k={ }
- P-CSI-RS (CSI 20ms) +AP-CSI-RS with interpolation, K'=2, k={1,2}
- P-CSI-RS (CSI 20ms) +AP-CSI-RS with interpolation, K'=2, k={4,5}
- P-CSI-RS (CSI 20ms) +AP-CSI-RS with interpolation, K'=2, k={7,8}

P/SP Tcsi-rs = 10ms
$N4=8$
$m = d = 1$ms
$n + \delta = 2$ms
$N_f = 4$
$N_s = 10$

X-axis: $|W_{ideal}^H * W_{pred}|$

Y-axis: CDF

## Fig. 13

Fig. 14

X: indicates the slot in which a CSI accuracy crossover between CSI prediction and ZoH has occurred or a CSI accuracy threshold has been exceeded, i.e. either CSI prediction accuracy is above or below ZoH CSI accuracy value

Europäisches
Patentamt

European
Patent Office

Office européen
des brevets

# EUROPEAN SEARCH REPORT

Application Number

EP 24 17 7837

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/254086 A1 (NOKIA TECHNOLOGIES OY [FI]) 8 December 2022 (2022-12-08) | 1-5, 10-15 | INV. H04L1/00 |
| Y | * paragraph [0030] - paragraph [0080]; | 6,7,9 | H04B7/06 |
| A | figures 1,3-5 * | 8 | H04L5/00 |
| | ----- | | |
| Y | WO 2023/091164 A1 (NOKIA TECHNOLOGIES OY [FI]; NOKIA USA INC [US]) 25 May 2023 (2023-05-25) | 6,7,9 | |
| A | * paragraph [0059] - paragraph [0067]; figures 4,5 * | 8 | |
| | ----- | | |
| T | SUAREZ LUIS ET AL: "3GPP Release 18 MIMO Enhancements: Channel State Information for Higher Speed Scenarios", 2023 15TH INTERNATIONAL CONGRESS ON ULTRA MODERN TELECOMMUNICATIONS AND CONTROL SYSTEMS AND WORKSHOPS (ICUMT), IEEE, 30 October 2023 (2023-10-30), pages 250-256, XP034483401, DOI: 10.1109/ICUMT61075.2023.10333289 [retrieved on 2023-12-05] * the whole document * | | |
| | ----- | | |

CLASSIFICATION OF THE APPLICATION (IPC)

INV.
H04L1/00
H04B7/06
H04L5/00

TECHNICAL FIELDS SEARCHED (IPC)

H04L
H04B

The present search report has been drawn up for all claims

| Place of search | Date of completion of the search | Examiner |
|---|---|---|
| Munich | 17 October 2024 | Martínez Martínez, V |

EPO FORM 1503 03.82 (P04C01)

## ANNEX TO THE EUROPEAN SEARCH REPORT
## ON EUROPEAN PATENT APPLICATION NO.

EP 24 17 7837

This annex lists the patent family members relating to the patent documents cited in the above-mentioned European search report.
The members are as contained in the European Patent Office EDP file on
The European Patent Office is in no way liable for these particulars which are merely given for the purpose of information.

17-10-2024

| Patent document cited in search report | | Publication date | Patent family member(s) | | Publication date |
|---|---|---|---|---|---|
| WO 2022254086 | A1 | 08-12-2022 | CN | 117397180 A | 12-01-2024 |
| | | | EP | 4348870 A1 | 10-04-2024 |
| | | | US | 2022386292 A1 | 01-12-2022 |
| | | | WO | 2022254086 A1 | 08-12-2022 |
| WO 2023091164 | A1 | 25-05-2023 | CN | 118556371 A | 27-08-2024 |
| | | | EP | 4437657 A1 | 02-10-2024 |
| | | | WO | 2023091164 A1 | 25-05-2023 |

EPO FORM P0459

For more details about this annex : see Official Journal of the European Patent Office, No. 12/82